Europäisches Patentamt

European Patent Office

Office européen des brevets

(19)

(11) **EP 0 804 743 B1**

(12) **FASCICULE DE BREVET EUROPEEN**

(45) Date de publication et mention
de la délivrance du brevet:
**29.01.2003   Bulletin 2003/05**

(21) Numéro de dépôt: **96938293.6**

(22) Date de dépôt: **12.11.1996**

(51) Int Cl.$^7$: **G01S 5/14**

(86) Numéro de dépôt international:
**PCT/FR96/01778**

(87) Numéro de publication internationale:
**WO 97/018485 (22.05.1997 Gazette 1997/22)**

(54) **SYSTEME MONDIAL DE RADIOLOCALISATION ET DE RADIONAVIGATION SPATIALES, BALISE, ET RECEPTEUR MIS EN OEUVRE DANS UN TEL SYSTEME**

GLOBALES WELTRAUMFUNKORTUNGS- UND -NAVIGATIONSSYSTEM, BAKE UND IN EINEM SOLCHEN SYSTEM EINGESETZTER EMPFÄNGER

GLOBAL SPACE RADIO NAVIGATION AND RADIOLOCATION SYSTEM, BEACON, AND RECEIVER USED IN SAID SYSTEM

(84) Etats contractants désignés:
**DE ES FR GB IT**

(30) Priorité: **14.11.1995  FR 9513478**

(43) Date de publication de la demande:
**05.11.1997   Bulletin 1997/45**

(73) Titulaire: **CENTRE NATIONAL D'ETUDES SPATIALES**
**75001 Paris (FR)**

(72) Inventeurs:
• **ISSLER, Jean-Luc**
  **F-31650 Saint-Orens (FR)**
• **AGUTTES, Jean-Paul**
  **F-31500 Toulouse (FR)**
• **BERGES, Dominique**
  **F-31500 Toulouse (FR)**
• **CUGNY, Bruno**
  **F-31130 Quinte-Fonsgrive (FR)**

(74) Mandataire: **Audier, Philippe André et al**
  **Brevalex,**
  **3, rue du Docteur Lancereaux**
  **75008 Paris (FR)**

(56) Documents cités:
**EP-A- 0 242 115**          **WO-A-82/01076**
**WO-A-95/00936**           **US-A- 4 445 118**

EP 0 804 743 B1

**Description**

Domaine technique

La présente invention concerne un système mondial dédié à la radionavigation et à la radiolocalisation de mobiles (par exemple de satellites) et de points fixes. Elle concerne également des balises et récepteurs mis en oeuvre dans ledit système.

Etat de la technique antérieure

Les systèmes de l'art connu sont notamment le système DORIS, le système GPS, le système GLONASS, le système PRARE.

Le système DORIS est décrit dans les références [1], [2] et [3].

Le système GPS-NAVSTAR est décrit dans la référence [4].

Le système GLONASS est décrit dans la référence [5].

Le système PRARE est décrit dans la référence [6].

L'invention a pour objet un système universel de radionavigation/localisation plus adapté et plus précis que les systèmes de l'art antérieur cités ci-dessus, pour un nombre important d'applications de navigation et localisation.

L'invention s'inscrit notamment dans le cadre du GNSS (Global Navigation Space System) désignant l'ensemble des systèmes mondiaux de radionavigation utilisant un secteur spatial et des codes courts d'étalement de spectre.

Un document de l'art connu, la demande de brevet WO 82 010 76, décrit un système permettant de déterminer les positions de plusieurs véhicules se déplaçant sur, ou au-dessus, d'un secteur défini de la surface terrestre. Ce système comprend un transpondeur porté par chaque véhicule pour émettre un signal de base codé en réponse à un signal d'interrogation générale, au moins trois satellites porteurs de répéteurs positionnés dans des endroits orbitaux espacés au-dessus de la terre pour recevoir et émettre les signaux de balise produits par les véhicules, et une station terrestre pour émettre périodiquement le signal d'interrogation général et pour recevoir et traiter les signaux de balise réémis par les trois satellites, afin de déterminer la position d'un véhicule. Afin d'éviter un recouvrement de signal et une saturation d'équipement au niveau de la station terrestre, chaque transpondeur de véhicule comprend des moyens sensibles au signal d'interrogation général pour inhiber l'émission d'autres signaux de balise par le transpondeur pendant un intervalle de temps prédéterminé suivant la réponse du transpondeur au signal d'interrogation général.

Exposé de l'invention

La présente invention propose un système mondial dédié à la radionavigation, à la radiolocalisation et la synchronisation de satellites, de véhicules, ou de points fixes utilisateurs, comprenant un secteur terrien, un secteur spatial, et un secteur utilisateur, dans lequel le secteur terrien comporte les éléments suivants :

- un réseau mondial de balises au sol émettant un signal radioélectrique monodirectionnel montant en spectre étalé à destination de troisièmes satellites dits utilisateurs, chacune de ces balises transmettant un message contenant un code d'identification ;
- un centre de contrôle qui élabore les plans d'organisation de travail de certains troisièmes satellites dits utilisateurs, ces plans d'organisation de travail comprenant des codes d'identification de balises à poursuivre et des périodes d'observation associées, ces plans d'organisation de travail étant transmis par des premières balises dites maîtresses au moment du survol de celles-ci par des satellites concernés ;
- un centré de traitement, qui reçoit les télémesures classées par le centre de contrôle, qui sépare les télémesures en deux groupes : des télémesures nécessaires aux traitements du centre de traitement, et des télémesures, spécifiques à certains clients, de services offerts par ledit système ;

dans lequel le secteur spatial est composé de premiers satellites dits maîtres participant étroitement au fonctionnement du système en permettant de synchroniser le réseau de balises, la télémesure de ceux-ci étant systématiquement adressée au centre de traitement, et de seconds satellites dits clients ;

dans lequel le secteur utilisateur est composé des troisièmes satellites dits utilisateurs munis de récepteurs utilisés par des clients du système et de secondes balises dites clientes,

caractérisé en ce que les produits issus des traitements du centre de traitement sont notamment :

- l'orbitographie précise de certains troisièmes satellites dits utilisateurs ;
- l'attitude précise de certains troisième satellites dits utilisateurs ;

- les paramètres représentatifs de l'ionosphère ;
- les coefficients d'horloge de certaines balises, référencés par rapport au temps du système qui est produit par le centre de traitement ;

ces produits étant d'une part distribués aux clients des services dudit système et retournés au centre de contrôle, qui les utilise pour élaborer ses plans d'organisation de travail et de programmation, et fournir des orbites aux stations de télémesure/télécommande utilisant les services dudit système,
et en ce que :

- le signal radioélectrique montant à destination des satellites émis par les balises au sol est modulé par un code court d'étalement de spectre, les antennes des balises étant pointées vers le zénith, avec un diagramme de rayonnement hémisphérique,
- les premiers satellites dits maîtres sont munis d'un récepteur spécifique connecté à un oscillateur ultra stable, les mesures brutes effectuées par ce récepteur et les données provenant des balises étant formatées sous la forme de télémesures, reçues au sol, à destination finale du centre de traitement, ces satellites ayant des orbites de type quasi-héliosynchrone, complétées par orbites de type basse et/ou géostationnaires,
- les seconds satellites dits clients n'adressent pas forcément leurs télémesures au centre de traitement, et ne sont pas nécessairement capables de traiter le message transmis par les premières balises dites maîtresses,
- deux balises de même type sont espacées d'une distance supérieure ou égale au diamètre des cercles de visibilité au sein desquels lesdites balises peuvent être utilisées.

Avantageusement les balises au sol sont de différents types, et notamment :

- des troisièmes balises dites d'orbitographie, dont la position est parfaitement connue, qui transmettent un signal en permanence, et qui transmettent leur position (et leur vitesse dans certains cas) périodiquement ;
- des secondes balises dites clientes, qui peuvent avoir une position a priori inconnue lors de leur mise en service ;
- des premières balises dites maîtresses, qui transmettent des informations utiles et des plans de travail à certains satellites utilisateurs et/ou partie prenante du système.

Les seconds satellites dits clients peuvent avoir tout type d'orbite et font à la fois partie du segment spatial et du segment utilisateur du système.
Les secondes balises dites clientes comprennent des balises de localisation, ou des balises de temps.
Les balises peuvent être monofréquences ou bifréquences.
Le système de l'invention peut comporter des récepteurs monofréquences ou bifréquences.
Le système de l'invention comporte, avantageusement, des quatrièmes balises dites de précision.
Les quatrièmes balises dites de précision peuvent être bifréquences et chaque porteuse transmise est modulée par un code long d'étalement de spectre (code de précision) et par un code court (code de référence).
Avantageusement le système de l'invention comporte des récepteurs en orbite, ou au voisinage de la surface terrestre (fixes ou mobiles).
Les récepteurs peuvent être les suivants :

- récepteurs de base ;
- récepteurs faible coût de navigation ;
- récepteurs faible coût de navigation et détection d'attitude ;
- récepteurs de navigation et d'attitude ;
- récepteurs pour navigation, orbitographie et détection d'attitude de précision ;
- récepteurs mixtes, capables de traiter les signaux transmis par les balises du système, ainsi que par les satellites des constellations GNSS.

Le système de l'invention, peut comporter des récepteurs traitant seulement les codes de référence et des récepteurs traitant à la fois les codes de référence et les codes de précision (récepteurs de précision).
Le système de l'invention peut comporter un sous-système de suivi précis de la dérive d'une horloge à atomes froids en orbite.
Dans le système de l'invention, le séquencement éventuel des émissions des balises clientes peut être géré selon un cycle journalier, décrit par des "Mots Semaine".
Dans un mode de réalisation les balises au sol sont toutes semblables, sur le plan architecture électrique et antenne, à l'exception :

- des balises adaptées au suivi précis de la dérive d'une horloge à atomes froids en orbite, qui, au lieu d'avoir un diagramme d'antenne de type hémisphérique, ont un diagramme directif ;
- de certaines balises de cellules autonomes locales, qui peuvent avoir un diagramme d'antenne spécifique.

Couplé à la technique de l'imagerie interférométrique à l'aide de satellites radar S.A.R., le système de l'invention peut permettre de suivre finement les déformations d'un terrain quadrillé par des balises reçues par un récepteur dudit système, monté sur lesdits satellites radar.

Le système de l'invention peut permettre de connaître finement des écarts entre les horloges des balises, et des balises de temps en particulier, à l'aide de satellites défilants et géostationnaires porteurs d'un récepteur dudit système.

Les satellites de navigation de type GNSS2 peuvent utiliser un récepteur dudit système pour réaliser leur propre navigation, et en dériver des éphémérides orbitales et horaires devant être diffusées à destination des utilisateurs desdits satellites GNSS2.

Le système de l'invention peut comporter des cellules autonomes locales de balises et de récepteurs, ces cellules pouvant dans certains cas être reliées radioélectriquement aux satellites maîtres ou clients.

Le système de l'invention est compétitif avec les systèmes GPS ou GLONASS pour la plupart des applications spatiales. Les mêmes raisonnements peuvent a fortiori être tenus vis-à-vis des systèmes DORIS actuels ou PRARE. De plus, le système de l'invention est potentiellement plus performant que tous ces systèmes, pour la plupart de leurs applications spatiales.

Brève description des dessins

- La figure 1 illustre les différentes composantes du système de l'invention ;
- la figure 2 illustre le schéma d'une balise de référence selon l'invention ;
- la figure 3 illustre les paramètres des antennes d'émission des balises de référence ;
- la figure 4 illustre schématiquement une balise de précision ;
- la figure 5 illustre un schéma de synthèse des différents types de balises ZZZ ;
- la figure 6 illustre un sous-système de mesure précise de dérive d'horloge à atomes froids montée sur satellite ;
- la figure 7 illustre un cercle de visibilité pour un satellite d'altitude $h_i$,
- la figure 8 illustre quatre cercles de visibilité ;
- les figures 9 et 10 illustrent la constitution d'un parc de balises à spectre étalé ;
- la figure 11 illustre un exemple d'affectation des codes des balises d'orbitographie ZZZ ;
- la figure 12 illustre une image interférométrique SAR ;
- les figures 13 et 14 illustrent des balises clientes comportant des batteries rechargées par des panneaux solaires ;
- les figures 15, 16 et 17 illustrent plusieurs schémas d'un satellite maître ;
- la figure 18 illustre le schéma d'un récepteur ZZZ de base ;
- les figures 19, 20 et 21 illustrent deux autres types de récepteur ZZZ ;
- la figure 22 illustre un récepteur mixte GNSS-ZZZ de base ;
- les figures 23 et 24 illustrent trois exemples de récepteur ZZZ adaptés à la détection d'attitude ;
- la figure 25 illustre le fonctionnement d'une antenne adaptée au cas d'un satellite en orbite basse ;
- la figure 26 illustre une liaison spatiale entre une balise ZZZ et un récepteur ZZZ ;
- les figures 27A, 27B et 27C illustrent trois configurations d'un récepteur de référence du système de l'invention ;
- la figure 28 illustre une exploration des cases Doppler ;
- la figure 29 illustre un satellite muni d'un récepteur ZZZ bifréquence ;
- la figure 30 illustre un exemple de charge utile de navigation GNSS2 ;
- la figure 31 représente une trace au sol d'un satellite à orbite de type $h_2$ ;
- les figures 32 et 33 illustrent différents écarts de temps déterminés par un satellite.

Exposé détaillé de modes de réalisation

Le système de l'invention est principalement dédié à la radionavigation et la radiolocalisation de satellites et de véhicules ou points fixes terrestres. Dans l'attente de recevoir un nom définitif, ce système sera appelé provisoirement ZZZ.

Au CNES (Centre National d'Etudes Spatiales), ce système ZZZ est désigné par l'avant projet DORIS NG (Système DORIS de Nouvelle Génération).

Ce système ZZZ hérite des principaux avantages respectifs des systèmes de type GPS et DORIS actuels.

Le système ZZZ de l'invention et les systèmes civils de navigation par satellites du futur (GNSS2) sont complémentaires et destinés à former à terme un système universel de radionavigation /localisation appelé GNSS3. Ceci est abrégé par la formule suivante :

$$ZZZ + GNSS2 = GNSS3$$

Les utilisateurs potentiels du système de l'invention sont classés suivant différents types de besoin :

- La plupart des satellites, dont les besoins opérationnels de synchronisation bord/sol et/ou de navigation et/ou d'orbitographie et/ou de détection d'attitude, sont compatibles avec les précisions offertes pour ces besoins, a priori supérieures à celles présentées par les systèmes GPS ou DORIS actuels. Les trajectoires de référence de ces satellites utilisateurs sont classées en quatre catégories principales d'orbites circulaires :

  - les orbites basses, d'altitude notée $h_1$. Ces orbites sont classiquement utilisées par les minisatellites et par les microsatellites ;
  - les orbites de type héliosynchrone, d'altitude $h_2$. Ces orbites sont classiquement utilisées par les satellites d'observation de la terre ;
  - les orbites géosynchrones d'altitude moyenne $h_3$, dont la période est proche de douze heures. Ces orbites sont classiquement utilisées par les constellations de satellites de radionavigation (GPS, GLONASS, GNSS2, ...) ;
  - les orbites géostationnaires, d'altitude $h_4$. Ces orbites sont classiquement utilisées par les satellites de télécommunication, de météorologie et de navigation (GNSS1, GNSS2).

On obtient ainsi :

h1 # 400 km
h2 # 800 km
h3 # 20 000 km
h4 # 36 000 km

Ces quatre types d'orbite représentent les trajectoires de satellites une fois mis à poste. Le système de l'invention peut également permettre la fonction d'orbitographie et/ou navigation pour la mise à poste de ces satellites.
Les besoins d'orbitographie/navigation / attitude peuvent être classés comme suit :

| BESOINS ALTITUDES | MAINTIEN A POSTE | | MISE A POSTE | |
|---|---|---|---|---|
| | NAVIG/ORBITO | ATTITUDE | NAVIG/ORBITO | ATTITUDE |
| $h_1$ | A 11 | A 21 | A 31 | A 41 |
| $h_2$ | A 12 | A 22 | A 32 | A 42 |
| $h_3$ | A 13 | A 23 | A 33 | A 43 |
| $h_4$ | A 14 | A 24 | A 34 | A 44 |

- La communauté scientifique, pour de nombreuses applications, comme :

  B1: L'observation de la ionosphère.
  B2: L'étude physique et météorologique de l'atmosphère gazeuse terrestre.

**B3**: La géodésie, la géodynamique et la géophysique, à l'échelle régionale ou planétaire (mouvements des pôles, tectonique, ...).

**B4**: L'étude du champ de gravité.

**B5**: L'altimétrie spatiale, pour des applications d'étude des océans.

**B6:** L'étude de la théorie de la relativité.

**B7:** L'étude d'horloges très stables embarquées.

**B8:** La synchronisation relative précise d'horloges au sol.

**B9**: La géodésie, la géodynamique et la géophysique à l'échelle locale (quadrillage d'un terrain pour en surveiller très précisément les mouvements...), étude, voire prédiction, des tremblements de terre, et plus généralement de certains risques naturels

**B10:** Surveillance du réchauffement climatique, notamment au-dessus des pôles, en utilisant la technique de radio-occultation de balises.

Le système de l'invention peut notamment contribuer aux références internationales dans les domaines suivants, cités à titre d'exemple :

- référentiels de temps (UTC) ;
- référentiels géodésiques ;
- référentiels gravimétriques ;
- modèles ionosphériques.

Le système de l'invention est potentiellement plus adapté et plus précis que le système DORIS actuel, le système GPS actuel, GLONASS et PRARE, pour la plupart de ces applications.

- Les navigateurs terrestres :

    **c1**: Aide à la navigation en route (avions, bateaux).

    **c2**: Aide à l'atterrissage des avions.

    **c3**: Transmission de corrections différentielles GNSS (pour avions, bateaux, satellites).

    **c4**: Navigation aérienne relative (applicable également à la navigation relative lors des rendez-vous spatiaux).

    **C5:** La synchronisation des aéroports.

    **C6:** La synchronisation des stations de surveillance et/ou de contrôle GNSS (GNSS1-étape 3, WAAS et GNSS2).

    **C7:** La localisation spatiale de mobiles à faible dynamique, comme des navires.

    **C8:** Trajectographie et/ou navigation locale de mobiles (avions, lanceurs, ....).

- Les communautés nationales :

    **D1:** Surveillance planétaire d'événements particuliers d'intérêt stratégique.

    **D2:** Synchronisation des bases terrestres ou aériennes, ainsi que des bateaux.

    **D3:** Navigation locale des engins (avions, bateaux, satellites, lanceurs).

    **D4:** Localisation spatiale de mobiles à faible dynamique, comme des bâtiments à la surface de la mer.

Les besoins D1 à D4 peuvent être satisfaits dans un contexte de résistance forte aux brouillages intentionnels.

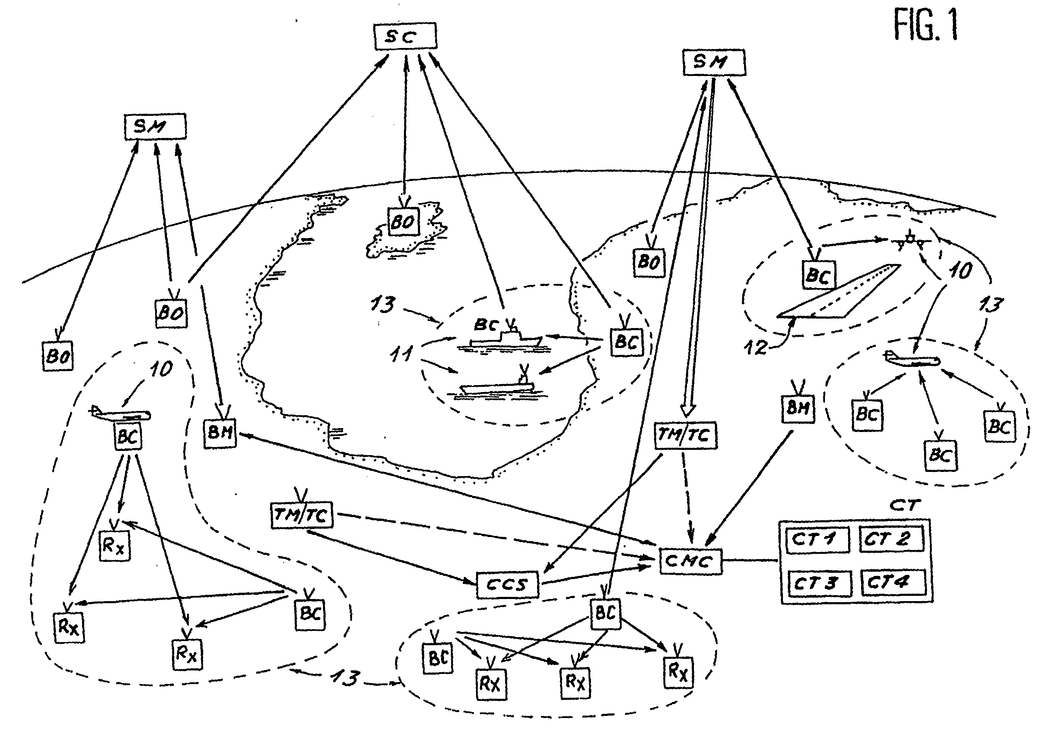

Les composantes du système de l'invention, illustrées sur la figure 1, sont les suivantes :secteur terrien, secteur spatial, secteur utilisateur.

**Secteur terrien**

Le secteur terrien est composé des éléments suivants :

- Un réseau principal de balises au sol (RBS) émettant un signal radioélectrique montant à destination des satellites utilisateurs. Chaque balise transmet un message, contenant un code d'identification. Ces balises sont de différents types, dont on décrit ici les trois catégories de base :

    - les balises d'orbitographie (BO), dont la position est parfaitement connue. Le système de l'invention détermine l'orbite des satellites utilisateurs à l'aide de ces balises. Les balises d'orbitographie transmettent un signal en permanence. Les balises d'orbitographie transmettent leur position (et leur vitesse dans certains cas) périodiquement ;

- les balises clientes (BC), comme les balises de localisation (BL) ou certaines balises de temps (BT), ont leur position et/ou leur temps propre qui sont a priori inconnus lors de leur mise en service. Le système de l'invention a pour but de localiser ces balises. Ces balises clientes font également partie du segment utilisateur,

- les balises maîtresses (BM), qui transmettent des informations utiles et des plans de travail à certains satellites utilisateurs et/ou partie prenante du système. Ce sont des balises d'orbitographie (BO), dans la même mesure où elles sont parfaitement localisées a priori. Ces balises sont connectées à des horloges très stables (atomiques ou maser à hydrogène, par exemple). Ces balises diffusent le temps du système de l'invention (et une référence de temps international telle que le temps UTC) sous la forme de coefficients d'horloge.

• Un centre de mission et de contrôle (CMC) : ce centre élabore les plans de travail de certains satellites utilisateurs et les transmet lorsque ceux-ci survolent les balises maîtresses. Un message destiné à un satellite particulier est précédé d'un code d'identification dudit satellite. Le centre de contrôle élabore les messages de configuration de certaines balises, qui lui sont reliées. Il ressort et classe également les télémesures des mesures de localisation faites à bord de certains satellites utilisateurs, à partir des signaux transmis par les balises reçues. Ces télémesures contiennent également certains paramètres enregistrés par les balises elles-mêmes (données provenant de capteurs météorologiques par exemple, état de santé...). Ces télémesures proviennent des stations de télémesure/ télécommande (TM/TC) (pas forcément spécifiques du système de l'invention) poursuivant les satellites utilisateurs. Elles parviennent au centre de contrôle soit directement, soit par l'intermédiaire des centres de contrôle spécifiques aux satellites concernés (centre de contrôle satellite : CCS).

• Un centre de traitement (CT) : ce centre de traitement (pouvant être réparti entre plusieurs entités) reçoit les télémesures classées par le centre de contrôle. Ce centre sépare les télémesures en deux groupes. L'un contient les télémesures nécessaires aux traitements propres du centre de traitement, l'autre celles qui sont spécifiques à certains clients des services offerts par le système de l'invention.

Les produits issus des traitements du centre de traitement sont par exemple :

- l'orbitographie précise et des ordres de routine de certains satellites utilisateurs ;
- l'attitude précise de certains satellites utilisateurs ;
- les paramètres représentatifs de la ionosphère ;
- les coefficients d'horloge de certaines balises, référencés par rapport au temps du système, lui-même produit par le centre de traitement ;
- les paramètres de rotation de la terre ;
- les positions mise à jour des balises.

Ces produits sont d'une part distribués aux clients des services du système de l'invention et retournés au centre de contrôle, qui les utilise pour élaborer ses plans de travail et de programmation, et fournir des orbites de routine aux stations de télémesure/télécommande utilisant les services du système de l'invention.

**Secteur spatial**

Le secteur spatial est composé de satellites maîtres et de satellites clients.

Les satellites maîtres (SM) participent étroitement au fonctionnement du système. Leur télémesure est systématiquement adressée au centre de traitement. Ils sont chacun munis d'un récepteur spécifique dit ZZZ dans la suite de la description connecté à un oscillateur ultrastable (OUS). Les mesures brutes effectuées par ce récepteur et les données provenant des balises sont systématiquement formatées sous la forme de télémesures, reçues par le sol, à destination finale du centre CT. Les satellites maîtres sont capables de traiter le message transmis par les balises maîtresses. Ces satellites ont des orbites de type quasi-héliosynchrone, éventuellement complétées par des orbites de type basses et/ou géostationnaires.

Les satellites clients (SC) n'adressent pas forcément leurs télémesures au centre de traitement. Ils ne sont également pas obligatoirement munis d'un oscillateur OUS (OCXO haut de gamme). Les satellites clients ne sont pas nécessairement capables de traiter le message transmis par les balises maîtresses. Ces satellites peuvent avoir tout type d'orbite, et en particulier des orbites de type basses, héliosynchrones, géosynchrones ou géostationnaires. Les satellites clients font à la fois partie du segment spatial et du segment utilisateur du système de l'invention.

**Secteur utilisateur**

Le segment utilisateur est composé :

- des porteurs fixes ou mobiles, comme des satellites clients, avions ou bateaux, munis de récepteurs ZZZ ;
- des balises clientes, comme les balises de localisation (ou les balises de temps).

La figure 1 illustre les différentes composantes du système de l'invention. Sur cette figure sont représentés des avions 10, des navires 11, une piste d'atterrissage 12.

Cette figure représente également des cellules autonomes locales 13 de balises et récepteurs clients, fixes ou mobiles au voisinage de la surface terrestre. Ces cellules sont autonomes dans la mesure où l'utilisation de satellites (maîtres ou clients) n'est pas strictement nécessaire. Ces cellules peuvent toutefois être reliées radioélectriquement à certains satellites du système, dans un souci de complémentarité des utilisations du système. Ces cellules locales peuvent par exemple répondre à des besoins de type B9, C1, C2, C3, C4, C8 et D3.

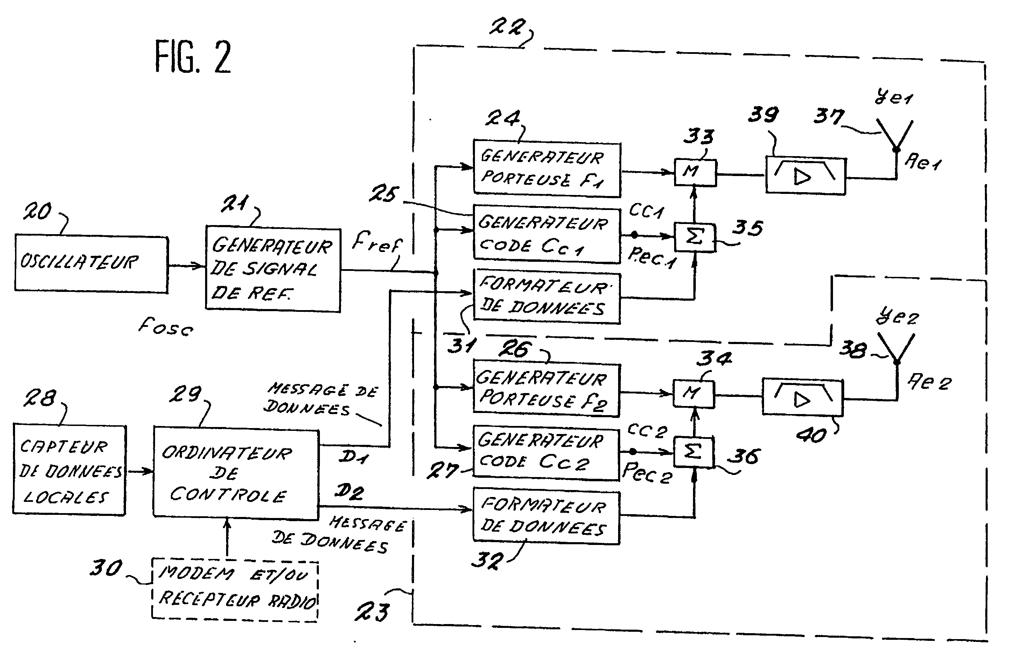

La figure 2 illustre le schéma d'une balise de référence selon l'invention.

Cette balise comprend donc :

- un oscillateur 20 ;
- un générateur de signal de référence 21 relié dans un module de génération et d'émission de signal 22 ;
- un générateur de porteuse à la fréquence $f_1$ 24 ;
- un générateur de code court $C_{c1}$ 25 ; et dans un module de génération et d'émission de signal 23 :

  - un générateur de porteuse à la fréquence $f_2$ 26 ;
  - un générateur de code court $C_{c2}$ 27.

Un capteur de données locales 28 est relié à un ordinateur de contrôle 29, qui peut être en liaison avec un MODEM et/ou un récepteur radio 30. L'ordinateur de contrôle est relié à un premier formateur de données 31, situé dans le module de génération et d'émission 22, et à un second formateur de données 32 situé dans le module de génération et d'émission 23.

Dans chaque module de génération et d'émission, le générateur de porteuse 24, 26 est relié à un modulateur 33, 34 qui reçoit un signal de commande d'un sommateur 35, 36 relié au générateur de code et au formateur. Chaque modulateur est relié à une antenne à diagramme de type hémisphérique 37, 38 via un amplificateur RF 39, 40. Une balise monofréquence ne contient que le module 22 ou le module 23.

Définition détaillée du système de l'invention

**Secteur terrien**

Les définitions utiles à la description des balises et aux signaux qu'elles transmettent sont les suivantes :

| | |
|---|---|
| $f_i$ = | Fréquence de la porteuse transmise n°i (Hz). |
| $C_{ci}$ = | Code pseudoaléatoire (code PN) court modulant la porteuse n°i; |
| $D_i$ = | Message de données modulant en bande de base le code $C_{ci}$. |
| $R_{ci}$ = | Rythme du code PN n°i (bribe/s). |
| $N_{ci}$ = | Nombre de bribes du code PN $C_{ci}$. |
| $T_{ci}$ = | Période de répétition du code $C_{ci}$ (s) |
| $T_{ci}$ = | $N_{ci}/R_{ci}$. |
| $A_{ei}$ = | Centre de phase de l'antenne d'émission à la fréquence $f_i$. |
| $P_{eci}$ = | Point d'origine du code $C_{ci}$. |
| $\Delta\tau_{12Ae}$ = | Retard différentiel entre les phases des codes $C_{c1}$ et $C_{c2}$, prises respectivement aux points $A_{e1}$ et $A_{e2}$. |
| $\Delta\tau_{12Pe}$ = | Retard différentiel entre les phases des codes $C_{c1}$ et $C_{c2}$, prises respectivement aux points $P_{ec1}$ et $P_{ec2}$. |
| $f_{osc}$ = | Fréquence de l'oscillateur de la balise. |
| $f_{ref}$ = | Fréquence du signal de référence pilotant les générateurs de code et de porteuse. |
| $n_{pi};m_{pi}$ = | Rangs de division entiers utilisés par le générateur de porteuse n°i. |
| $f_i$ = | $r_{ref} \times \dfrac{n_{pi}}{m_{pi}}$ |
| $n_{Cci};m_{Cci}$ = | Rangs de division entiers utilisés par le générateur du code PN court n° i. |
| $R_{ci}$ = | $fref \times \dfrac{n_{Cci}}{m_{Cci}}$. |
| $n_r;m_r$ = | Rangs de division utilisés par le générateur du signal de référence. |

$f_{ref} = \qquad f_{osc} \times \dfrac{n_r}{m}.$

$P_{ei} = \qquad$ Puissance du signal émis au point $A_{ei}$.

$Y_{ei} = \qquad$ Expression temporelle du signal émis au point $A_{ei}$.

$\varphi_{ei} = \qquad$ Phase de la porteuse émise au point $A_{ei}$.

$Y_{ei} = \qquad \sqrt{2P_{ei}}\cos(2\pi f_i t + \varphi_{ei}).C_{ci}(t).D_i(t).$

$\Delta\tau_i PA_e = \qquad$ Temps de propagation de groupe entre les points $A_{ei}$ et $P_{Cci}$

A titre d'exemple, des valeurs possibles pour les paramètres fondamentaux de la balise et du signal de référence transmis sont les suivantes :

$f_{ref} = \qquad$ 10,23 MHz.

$f_{osc} = \qquad$ 10,23 ou 10 MHz.

$f_1$ # $\qquad$ bande S (2025-2110 MHz), ou bande X (7145-7235 MHz).

$f_2$ # $\qquad$ bande UHF (401-403 MHz), ou bande L (960-1215 MHz ou 1215-1240 MHz ou 1240-1260 MHz ou 1427-1429 MHz ou 1559-1610 MHz ou 1613,8-1626,5 MHz), ou bande S (2025-2110 MHz).

$R_{Cc1}$ # $\qquad$ 1,023 Mbribes/s.

$R_{Cc2}$ # $\qquad$ 1,023 ou 0,511 Mbribes/s.

$R_{D1} = \qquad$ 50 bits/s ou 500 bits/s.

$R_{D2} = \qquad$ 50 bits/s ou 500 bits/s.

$N_{Cc1}$ # $\qquad$ 1023

$N_{Cc1}$ # $\qquad$ 1023 ou 511

Les codes $C_{c1}$ et $C_{c2}$ peuvent être identiques. Dans ce cas, les générateurs de code $C_{c1}$ et $C_{c2}$ représentés sur la figure 2 sont confondus. On obtient alors $\Delta\tau_{12}P_e$=0 Dans le cas contraire, le rapport entre les durées $T_{c1}$ et $T_{c2}$ doit être entier et, si possible, égal à 1. Les codes $C_{ci}$ sont appelés codes de référence.

Par exemple, les codes PN courts peuvent être des codes C/A GPS et/ou GLONASS. Les rythmes des données peuvent être par exemple ceux des signaux GPS (et/ou GLONASS et/ou RGIC - INMARSAT 3 -). Ces exemples de choix permettent de réutiliser telles quelles ou en grande partie des technologies existantes pour les circuits électroniques des balises et des récepteurs ZZZ. Cette réutilisation peut être avantageusement faite pour réduire les coûts des balises et des récepteurs, en maintenant un cadre compétitif permanent basé sur l'utilisation d'un format standard de signal de radionavigation.

Les balises du système de l'invention sont dites balises ZZZ.

Les balises ZZZ de base sont bifréquences. Toutefois, des balises monofréquences peuvent être utilisées au sein du segment sol du système de l'invention.

Les oscillateurs des balises ZZZ de base sont des oscillateurs à quartz haut de gamme (OUS : oscillateur ultrastable). Toutefois, des horloges atomiques et/ou des masers à hydrogène et/ou des horloges à atomes froids peuvent également y être connectés.

Une balise bifréquence connectée à une horloge, très stable à moyen et long terme, munie d'un dispositif de calibration en temps, est une balise de temps.

Les balises ZZZ de base sont connectées à un microcalculateur (interne ou externe), permettant de programmer certains paramètres des balises et de vérifier leur bon fonctionnement. Le microcalculateur est relié à des capteurs de mesures locales. Ces capteurs peuvent être de différents types, cités ici à titre d'exemple :

- Capteurs de données météorologiques (pression, hygrométrie, température, par exemple). Ces données météorologiques peuvent être utilisées par exemple pour :

  - déterminer les erreurs de mesure faites par les récepteurs ZZZ, à cause de l'atmosphère traversée par les signaux reçus par lesdits récepteurs,
  - centraliser des données météorologiques à des fins de surveillance/prévision du climat.

- Capteurs de mesures brutes GNSS (pseudodistance, pseudovitesse) ou de corrections différentielles GNSS. Ces données sont utilisées à des fins de navigation relative (orbitale ou aérienne) ou différentielle locale (orbitale, aérienne ou maritime).

- Capteurs de coefficients d'horloge. Les coefficients d'horloge $\alpha_0$, $\alpha_1$, $\alpha_2$ sont tels que l'écart $\Delta T$ entre l'horloge de la balise et le temps du système de l'invention est approximé par la formule suivante :

$$\Delta T(t) \,\#\, \alpha_0.(t_0) + \alpha_1.(t-t_0) + \alpha_2.(t-t_0)^2$$

où t est l'instant courant et $t_0$ l'instant de mesure des coefficients d'horloge.

Ces coefficients d'horloge peuvent être mesurés par un récepteur GPS ou GLONASS ou GNSS2 placé à proximité de la balise. Ces coefficients peuvent également être déterminés de façon autonome par le centre de traitement du système de l'invention et retransmis à destination de certaines balises, par liaison filaire ou radioélectrique. Ces coefficients peuvent être diffusés par le message transmis par les balises de temps (BT).

• Capteurs d'état de santé des différents éléments constitutifs de la balise permettant de diagnostiquer des pannes à distance, au niveau du centre de contrôle du système de l'invention.
• Capteurs de calibration : ce capteur mesure périodiquement les différents retards différentiels et/ou absolus intervenant dans la calibration en temps de la balise considérée. Ces paramètres sont $\Delta\tau1PAe$ et/ou $\Delta\tau2PAe$ et/ou $\Delta\tau12Ae$ et/ou $\Delta\tau12Pe$.

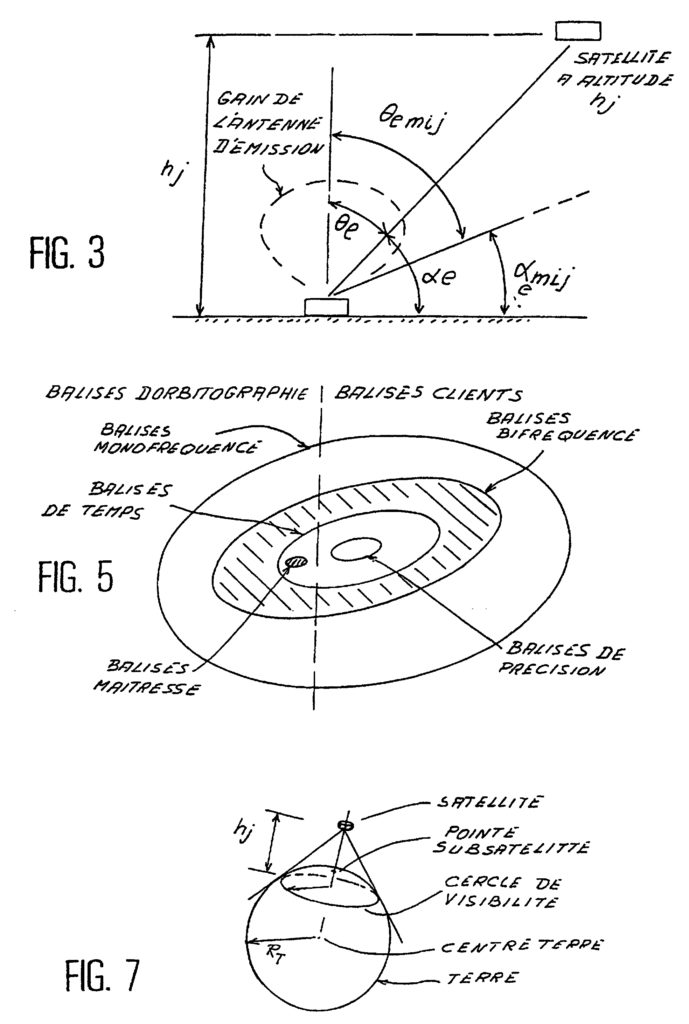

Dans le cas des balises bifréquences, les données provenant d'un ou plusieurs types de capteurs peuvent être transmises à l'aide du message binaire D1, tandis que les données provenant d'autres types de capteurs peuvent être transmises à l'aide du message binaire D2. Les messages binaires D1 et D2 peuvent également être identiques.
Les balises ZZZ peuvent être monofréquences. Elles transmettent donc le signal $y_{e1}$ ou $y_{e2}$, selon les cas.
Les balises de référence sont également caractérisées par leurs antennes d'émission, décrites par les paramètres suivants, représentés sur-la figure 3 :

$\alpha_e$ = Angle d'élévation du satellite vu depuis la balise, par rapport à l'horizontale locale.
$\alpha_{emij}$ = Angle d'élévation minimum considéré par rapport à l'horizontale locale pour la fréquence i et l'altitude satellite hj.
$\theta_e$ = Angle de visée du satellite par rapport à la verticale locale.
$\theta_{emij}$ = Angle de visée maximum considéré pour la fréquence i et l'altitude du satellite hj.
$G_{ei}(\theta_e)$ = Gain de l'antenne d'émission pour un angle de visée $\theta_e$ et pour la fréquence i.

Les antennes de référence sont bifréquences et peu directives ; leur diagramme est de type hémisphérique. Il peut éventuellement compenser partiellement la dégradation du bilan de liaison pour des angles $\alpha_e$ faibles. Il a idéalement une symétrie de révolution par rapport à la verticale locale. L'antenne est adaptée à l'émission de signaux en polarisation circulaire. Son centre de phase est bien repéré.
La où l'une des fréquences-porteuses associées à certaines cellules autonomes locales de balises et de récepteurs peut être différente des fréquences $f_1$ et $f_2$ décrites précédemment, dans le cas où lesdites cellules ne nécessitent pas d'être complètement reliées radioélectriquement aux satellites maîtres ou clients. Dans ce cas, la fréquence spécifique aux cellules autonomes locales est notée $f_3$.
Le système de l'invention comporte également une sous-catégorie de balises, dites balises de précision. Ces balises émettent un signal $y_{eiP}$ comportant à la fois des codes courts $C_{ci}$ et des codes longs notés $C_{Li}$. Ces codes longs sont appelés codes de précision. Ces codes peuvent être des codes P de type GPS et/ou GLONASS par exemple.
A puissance totale transmise égale, le brouillage de tels signaux est plus difficile que dans le cas des codes courts, ie brouillage desdits codes courts étant lui-même plus difficile que dans le cas d'une modulation à bande étroite.
Ces balises peuvent avoir une antenne à diagramme hémisphérique, comme dans le cas des balises de référence, ou à diagramme à directivité importante, pour des applications d'orbitographie et de synchronisation ultraprécise concernant les satellites géostationnaires.
L'horloge connectée à une balise de précision peut être de type atomique ou Maser ou atomes froids, si cette balise est au sol.
Les balises de précision peuvent également être connectées à une horloge à atomes froids montée sur un satellite en orbite. Si ce satellite est également muni de récepteurs ZZZ adaptés à la réception des signaux transmis par des balises de précision situées au sol (colocalisées avec des récepteurs ZZZ), on obtient un sous-système de suivi précis de la dérive d'une horloge à atomes froids en orbite.
En tant que balises connectées à une horloge ayant une stabilité long terme au moins aussi précise que celle d'une horloge atomique, les balises de précision sont donc des balises de temps particulières.
Le sous-système de ZZZ composé de balises de précision directives et des récepteurs associés est nommé "ZZZ-Time".

$$y_{eip} = \sqrt{2P_{ei}}\cos(2\pi fit + \varphi_{ei})\,x\,C_{ci}(t)\,x\,Di(t) + a_i\sqrt{2P_{ei}}\sin(2\pi fit + \varphi_{ei})$$

$$x\ C_{Li}(t)\ x\ Di(t)$$

Le coefficient $a_i$ représente l'amplitude relative de la composante du signal $y_{eip}$ comportant le code long, modulant la porteuse $f_i$ en quadrature.

Dans le cas où la balise est fortement directive, les fréquences $f_i$ peuvent être différentes de celles associées aux balises de référence, dans le but d'éviter les brouillages de ces dernières.

De même, si un satellite recevant les signaux provenant de balises de précision au sol emporte une balise de précision embarquée, les fréquences $f_i$ associées à cette dernière doivent être différentes de celles associées auxdites balises de précision au sol. Ceci évite les interférences entre les liaisons montantes et descendantes.

| | |
|---|---|
| $R_{Li}$ = | Rythme du code long modulant la porteuse $f_i$. |
| $N_{Li}$ = | Nombre de bribes du code long. |
| $T_{Li}$ = | Durée du code long. |
| $n_{CLi}$ = | Rapport entier de rythme entre les codes $C_{Li}$ et $C_{ci}$. |

A titre d'exemple, ces paramètres peuvent être tels que :

| | |
|---|---|
| $R_{Li}$ = | 10,23 ou 5,11 Mbribes/s |
| $n_{CLi}$ = | $R_{Li}/R_{Ci}$ = 10 |
| $T_{Li}$ = | Une semaine |

Le message Di émis par les balises de précision comporte un compteur de temps mis à jour périodiquement. La date contenue dans ce compteur permet de prépositionner le circuit d'acquisition du code de précision.

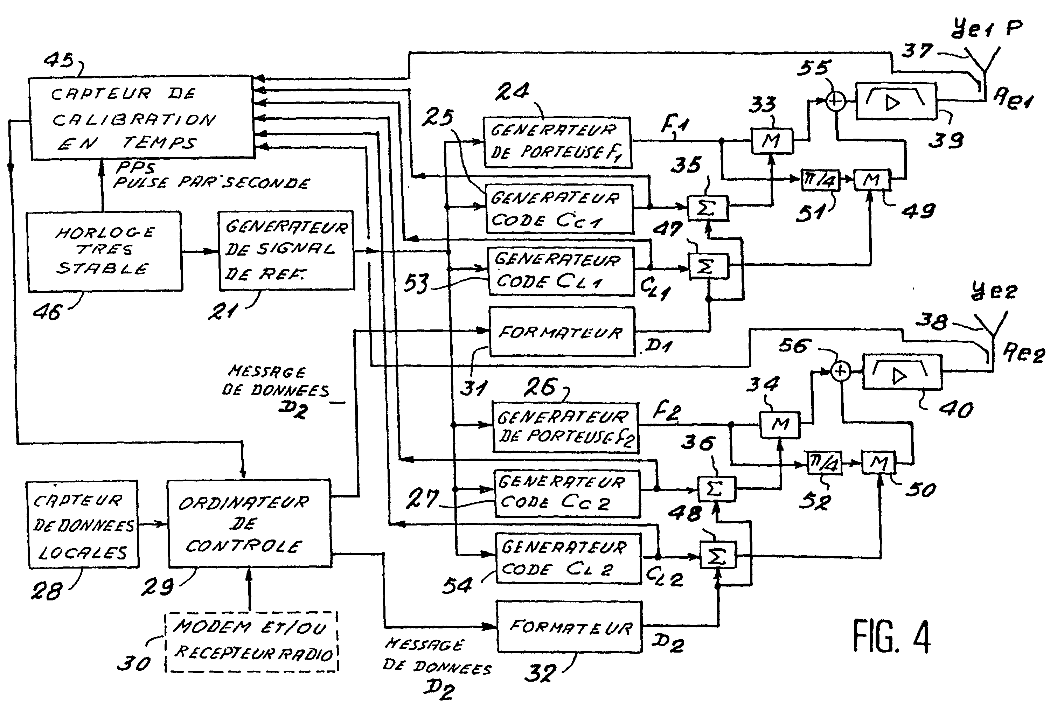

Une balise de précision peut être réalisée, comme représenté sur le schéma de la figure 4.

On retrouve sur cette figure un certain nombre d'éléments déjà illustrés sur la figure 2 ; ils sont représentés ici avec la même référence.

Il y a, en outre, de nouveaux éléments :

- un capteur calibrateur de temps 45 ;
- une horloge très stable 46
- deux sommateurs 47, 48 ;
- deux modulateurs 49, 50 ;
- deux déphaseurs $\pi/4$ 51, 52 ;
- deux générateurs de codes CL1 et CL2 53, 54 ;
- deux additionneurs 55, 56.

Dans le cas où un code de précision est surtout requis pour des raisons de résistance aux brouillages, il n'est pas strictement nécessaire que la balise de précision transmette un tel code à la fois sur les fréquences $f_1$ et $f_2$.

Dans une variante du système de l'invention, certaines balises maîtresses peuvent être des balises de précision.

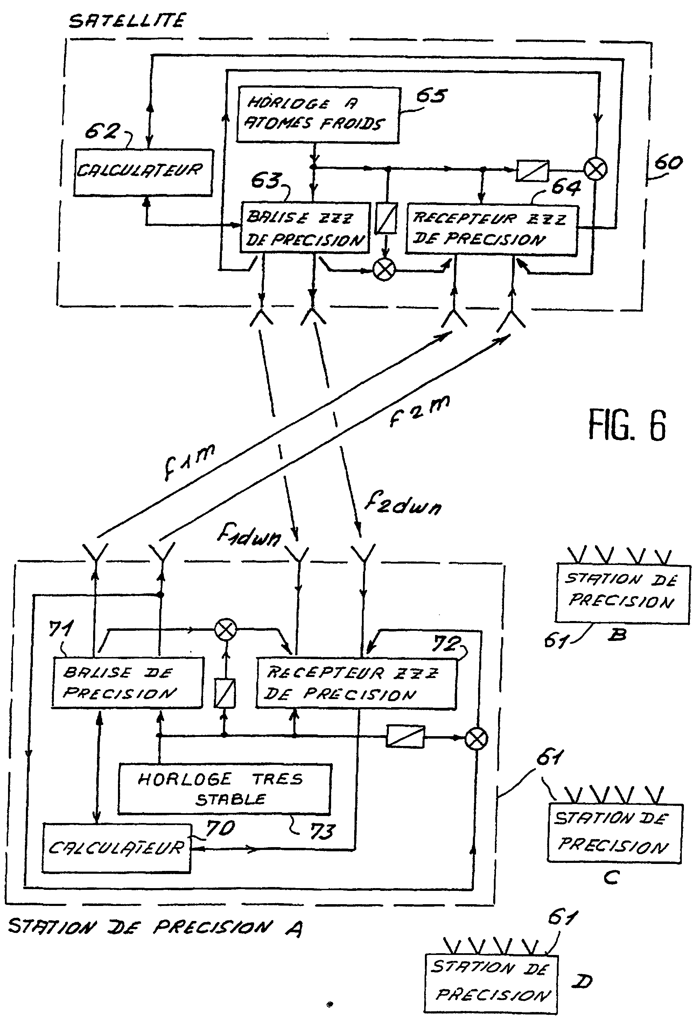

La figure 5 illustre un schéma de synthèse des différents types de balises ZZZ (les hachures représentent le système de l'invention ZZZ de référence (version de base) ; le reste de la figure représente le potentiel d'évolution de la version de base).

La figure 6 illustre un sous-système de mesure précise de dérive d'horloge à atomes froids montée sur satellite. La dérive de ladite horloge est suivie très finement si le satellite est géostationnaire.

Sur cette figure est représenté d'une part un satellite 60, et d'autre part des stations de précision 61. Le satellite 60 comprend un calculateur 62 relié à une balise de précision 63 et à un récepteur de précision 64, et une horloge à atomes froids 65.

Chaque station 61 comprend un calculateur 70 relié à une balise de précision 71 et à un récepteur de précision 72, et une horloge atomique ou maser à hydrogène 73.

Les antennes bord et sol de ce sous-système sont directives.

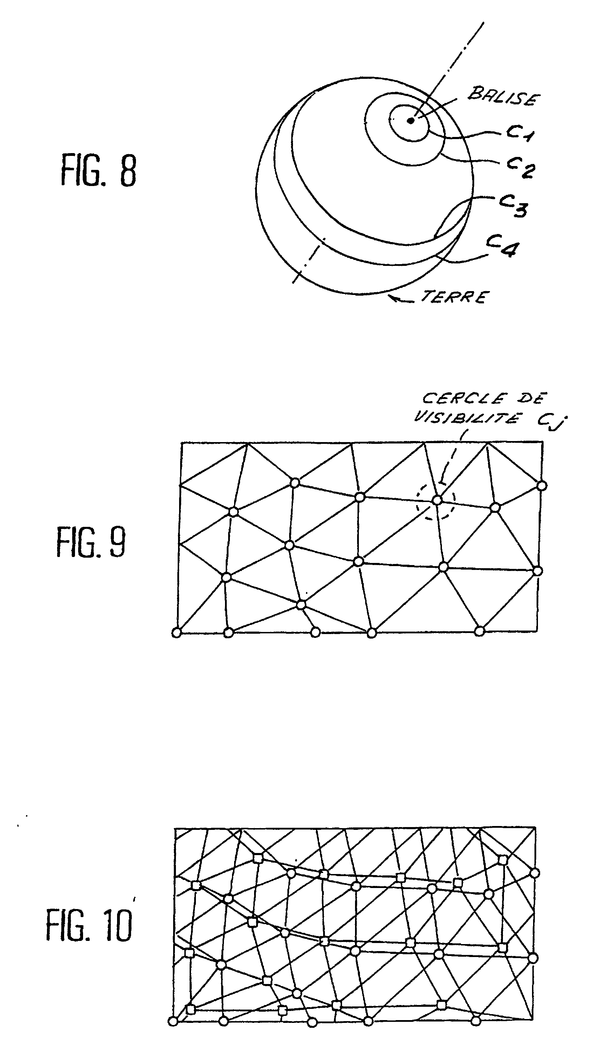

Le système de l'invention se caractérise également par les règles d'affectation des codes pseudoaléatoires aux balises. Ces règles considèrent la notion de cercle de visibilité. Un tel cercle entoure la surface terrestre visible par un satellite d'altitude $h_j$, comme représenté sur la figure 7.

Un cercle de visibilité $C_j$ se caractérise par son centre situé sur la surface de la terre, à la verticale du satellite et par sa surface

$$S_j = 2\pi \left( \frac{h_j}{R_T + h_j} \right) \times R_T^2$$

$R_T$ étant le rayon terrestre.

On définit également le rapport des surfaces des cercles de visibilité associés aux altitudes $h_i$ et $h_j$, noté $R_{sij}$ :

$$R_{sij} = \frac{h_j(R_T + h_i)}{h_i(R_T + h_j)} \qquad \text{avec } h_j > h_i$$

On associe également des cercles de visibilité aux balises. Ces cercles sont ceux définis précédemment et centrés sur la balise. On suppose que le satellite se situe à la verticale de ladite balise.

Sur la figure 8, on a représenté quatre cercles de visibilité ($C_1$, $C_2$, $C_3$, $C_4$) correspondant aux altitudes $h_1$, $h_2$, $h_3$ et $h_4$.

On remarque que les rayons des cercles $C_3$ et $C_4$ sont semblables, alors que les altitudes associées $h_j$ sont différentes. On obtient donc $R_{S34} \# 1$. Cette remarque reste valable pour des orbites d'altitude supérieure à $h_4$.

Les cercles de visibilité intervenant dans le dimensionnement du système de l'invention sont donc de type $C_1$, $C_2$ et $C_4$ au premier ordre.

La règle de base de constitution du réseau de balises ZZZ est la suivante : "deux balises affectées d'un code identique devant être nominalement poursuivies par un même satellite doivent être éloignées d'une distance supérieure au diamètre du cercle de visibilité associé audit satellite". Cette règle évite les interférences entre codes PN identiques.

Les figures 9 et 10 illustrent la constitution d'un parc de balises à spectre étalé, par exemple d'un système à deux codes pseudoaléatoires. Dans cet exemple utilisant la règle de constitution décrite ci-dessus, il existe deux types de balise :

- les balises identifiées par le code PN noté "O",
- les balises identifiées par le code PN noté "□".

La règle de constitution du réseau est la suivante : deux balises de même type doivent être espacées d'une distance supérieure ou égale au diamètre des cercles de visibilité $C_j$ au sein desquels lesdites balises peuvent être utilisées. La figure 9 illustre la constitution du premier sous-réseau respectant ladite règle. La figure 10 illustre la constitution du parc par ajout du second sous-réseau respectant ladite règle.

La règle de constitution du réseau de balises est a fortiori respectée dans le cas particulier où chaque balise est associée à un code différent de tous les autres (cas particulier du système de l'invention).

On définit les notations complémentaires suivantes :

$N_{ij} =$ Nombre total maximum maximorum de balises ZZZ transmettant simultanément à la fréquence $f_i$ dans un cercle de visibilité Cj. Ce nombre est défini par la performance désirée pour le système de l'invention. Il dépend essentiellement des bilans de liaison et d'erreur de mesure.

$N_{ijo} =$ Nombre maximum maximorum de balises d'orbitographie transmettant à la fréquence $f_i$ dans un cercle Cj.

$N_{ijot} =$ Nombre maximum typique de balises d'orbitographie transmettant à la fréquence $f_i$ dans un cercle Cj.

$N_{ijou} =$ Nombre maximum typique de balises d'orbitographie transmettant à la fréquence $f_i$ utilisables dans un cercle Cj.

$N_{ijct} =$ Nombre total maximum typique de balises client transmettant simultanément à la fréquence $f_i$ dans un cercle de visibilité Cj.

$N_{ijc} =$ Nombre total maximum minimorum de balises client transmettant simultanément à la fréquence $f_i$ dans un cercle de visibilité Cj.

$C_{oi.k} =$ Numéro du k-ième code PN associé à une balise d'orbitographie, pour la fréquence $f_i$.

$N_{Ma} =$ Nombre total de balises maîtresses.

$N_{Mj}$ Nombre de balises maîtresses dans un cercle Cj.

$N_{io} =$ Nombre total maximum de balises d'orbitographie transmettant à la fréquence $f_i$ sur la surface de la terre.

$N_{iot} =$ Nombre maximum typique de balises d'orbitographie transmettant à la fréquence $f_i$ sur terre.

$\tau_o =$ Indice d'affaiblissement de la densité du réseau de balises d'orbitographie dû à la présence de zones océaniques sans îles ou barges flottantes ou navires porteurs.

Exemple d'affectation des codes PN

Dans cet exemple, on considère les balises transmettant au moins à la fréquence $f_1$.

On suppose qu'un cercle $C_2$ ne contient pas plus de huit balises d'orbitographie. Considérons le cas où $N_{12o}$ = 8.

D'après la règle de base, les codes PN associés à ces huit balises sont tous différents. Ces codes sont nommés $C_{o1.1}$, $C_{o1.2}$, $C_{o1.3}$, $C_{o1.4}$, $C_{o1.5}$, $C_{o1.6}$, $C_{o1.7}$ et $C_{o1.8}$.

On en déduit le nombre moyen $N_{11om}$ de balises d'orbitographie dans un cercle $C_1$. Ce nombre est donné par la relation suivante :

$$N_{11om} = \frac{N_{12ot}}{R_{S12}}$$

$R_{S12}$ = 1,88 avec $h_1$ = 400 km, d'où : $N_{11om}$ = 4,25.

Ceci permet d'espérer une couverture de balises d'orbitographie suffisante pour que les satellites en orbite basse puissent observer au moins quatre balises.

On peut donc écrire : $N_{11o} \geq N_{11ot} \geq 4$.

Ce nombre de quatre balises est choisi pour permettre la faisabilité des applications de détection d'attitude autonome aux altitudes de type $h_1$, ainsi que la convergence rapide des navigateurs spécifiques ZZZ embarqués à cette altitude. En effet, les récepteurs ZZZ uniquement dédiés à des applications de navigation/attitude peuvent être munis d'un oscillateur faible précision/faible coût comme un TCXO. La dérive des horloges des balises ZZZ peut être considérée comme négligeable par rapport à celle d'un TCXO, lors du processus d'auto-initialisation (voire même en mode nominal).

La poursuite de la pente de ce TCXO par le filtre de navigation embarqué (navigateur ZZZ) peut donc être obtenue de façon quasi-instantanée, même en orbite basse.

Un réseau suffisamment dense (tel que $N_{1ot} \geq 4$) ouvre donc des applications d'utilisation du système de l'invention en orbite basse, jusqu'alors exclues pour des systèmes tels que le système DORIS actuel (réseau risquant la saturation pour une telle densité en présence de balises de localisation) et PRARE (station sol PRARE trop complexe, au coût prohibitif pour atteindre de telles densités).

Ces application sont à ce jour uniquement accessibles pour les systèmes GPS et GLONASS.

De plus, un réseau suffisamment dense de balises accessibles simultanément peut permettre de réaliser l'orbitographie précise de satellites en orbite basse, à des fins d'étude du champ de gravité aux altitudes correspondantes, sans que soit nécessaire l'ajout de balises spatialisées sur lesdits satellites ; balises supposées être poursuivies par des satellites en orbite d'altitude supérieure, ni qu'il soit nécessaire de modifier les récepteurs de référence pour poursuivre lesdites balises en orbite.

Par ailleurs, on suppose que l'on souhaite pouvoir poursuivre simultanément sept balises d'orbitographie par cercle $C_3$ ou $C_4$. Ces sept balises ne sont pas toutes strictement nécessaires pour atteindre la précision de navigation recherchée, mais elles offrent un niveau de redondance et permettent le RAIM (Receiver Autonomous Integrety Monitoring). On a donc $N_{4ou}$ = 7. Le système ZZZ de base utilise avantageusement les mêmes types de balises sol (diagramme d'antenne, puissance émise....) pour tous les types d'orbite, y compris les orbites géostationnaires et géostationnaires de transfert. Les balises se distinguent seulement par leur numéro de code pseudoaléatoire et leur numéro d'identification.

Les codes $C_{o1.1}$ à $C_{o1.8}$ définis précédemment ne sont a priori pas utilisables, car on retrouve chacun d'entre eux plusieurs fois dans un même cercle $C_4$. En effet, on obtient $R_{S24}$ # 7,5 pour $h_2$ = 800 km et $h_4$ = 36 000 km.

Les sept balises observables depuis les cercles $C_3$ ou $C_4$ doivent donc avoir des codes PN différents des codes $C_{o1.1}$ à $C_{o1.8}$. Ces nouveaux codes PN sont appelés $C_{o1.9}$, $C_{o1.10}$, $C_{o1.11}$, $C_{o1.12}$, $C_{o1.13}$, $C_{o1.14}$ et $C_{o1.15}$. On obtient donc :

$$N_{14ot} = N_{12ot} \times R_{S24} + N_{14ou}$$

$$\ldots\ldots\ldots\ldots\ldots\ldots\ldots\ldots\ldots\ldots$$

$$N_{14ot} = 7,5 \times 8 + 7$$

$$\ldots\ldots\ldots\ldots\ldots\ldots\ldots\ldots\ldots\ldots$$

$$N_{14ot} = 67.$$

Les codes $C_{o1.9}$ à $C_{o1.15}$ sont également observables par tous les satellites situés à des altitudes inférieures à $h_3$ ou $h_4$, et donc a fortiori pour les satellites en orbite héliosynchrone $h_2$ ou basse $h_1$.

Le nombre moyen M de codes $C_{o1.9}$ à $C_{o1.15}$ observables dans un cercle $C_2$ est donc tel que :

$$M \# \frac{R_{S24}}{N_{14ou}} = \frac{7,5}{7} \# 1$$

Pour limiter la valeur de $N_{12o}$, et donc garantir une valeur minimum pour $N_{12c}$, on limite à m=2 le nombre maximum de balises d'orbitographie dont le code est compris entre $C_{o1.9}$ et $C_{o1.15}$ dans un cercle $C_2$ :

$$N_{12o} = N_{12ot} + m$$

$$N_{12o} = 8 + 2 = 10$$

Le réseau de balises d'orbitographie doit comporter au moins $N_{4M} = 2$ balises maîtresses par cercle de visibilité $C_4$ (: une balise maîtresse de référence et une balise maîtresse en redondance chaude). Celles-ci pourront transmettre des informations spécifiques à destination des satellites (maîtres ou clients) en orbite géostationnaire, entre les passages de certains satellites à défilement. Les codes PN associés aux balises maîtresses doivent donc être compris entre $C_{o1.9}$ et $C_{o1.15}$. Le nombre $N_{14ou}$ (=7) contient donc les balises maîtresses.

Les codes $C_{o1.1}$ à $C_{o1.15}$ sont tous orthogonaux entre eux.

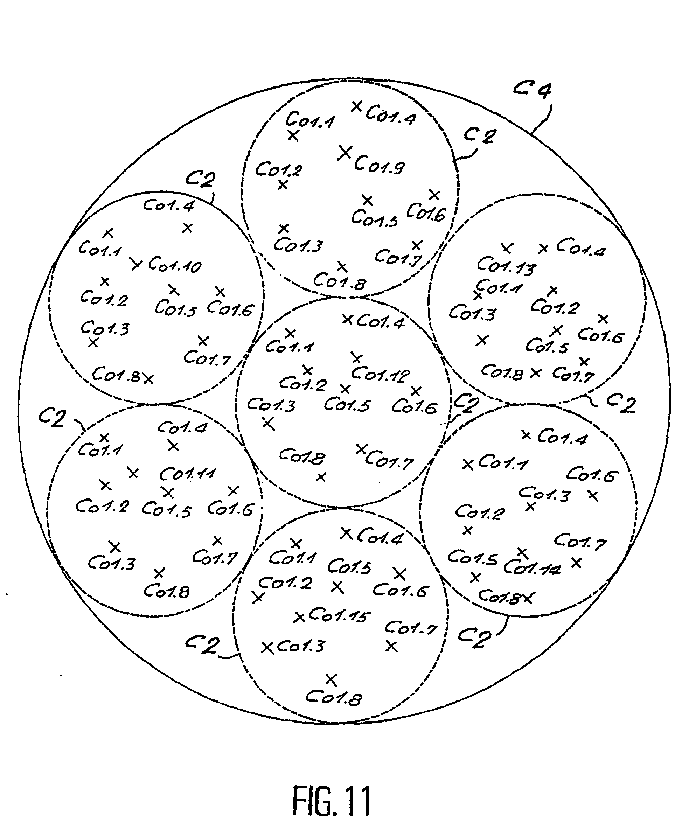

La figure 11 illustre un exemple d'affectation des codes des balises d'orbitographie ZZZ.

Le nombre total de balises maîtresses NM est donc au minimum :

$$N_{Ma} = \frac{S_T}{S_4} \times N_{4M}$$

où $S_T$ est la surface de la terre, $S_T = 4\pi R_T^2$, $N_{Ma} \# 2,35 \times 2 \# 5$.

La mise en place des balises maîtresses ZZZ peut être progressive. En effet, deux ou trois balises maîtresses peuvent suffire aux besoins des satellites placés sur des orbites d'altitude de type $h_2$, ainsi qu'aux satellites géostationnaires associés aux zones de visibilité où ces deux ou trois balises se trouvent. Le besoin d'augmentation du nombre de balises maîtresses par rapport à cette configuration initiale provient à la fois de la couverture totale de l'orbite géostationnaire et de la faiblesse du nombre de contacts des satellites en orbite basse (altitude de type $h_1$), avec une balise maîtresse particulière. En effet, ces balises sont reliées au temps système de l'invention, lui-même relié à une référence de temps internationale telle que UTC. Elles peuvent en effet servir au rattachement des horloges embarquées à une référence de temps connue (synchronisation bord-sol). L'augmentation du nombre de balises maîtresses (et/ou de balises de temps reliées à une référence de temps) par rapport à ladite configuration initiale permet également de diminuer le temps d'auto-initialisation des navigateurs orbitaux embarqués dans les récepteurs ZZZ embarqués sur des satellites défilants. On introduit les notations suivantes :

$m_{ijo} =$ Nombre de balises d'orbitographie monofréquences transmettant à la fréquence $f_i$ dans un cercle Cj.

$b_{jo} =$ Nombre de balises bifréquences dans un cercle Cj.

On obtient donc :

$$N_{ijo} = b_{jo} + m_{ijo}$$

Dans l'exemple décrit précédemment, on a supposé qu'un cercle $C_2$ ne contient pas plus de huit balises d'orbitographie transmettant à la fréquence $f_1$, soit :

$$N_{12o} = b_{2o} + m_{12o} \leq 8$$

De même, on a supposé que le nombre de balises d'orbitographie transmettant à la fréquence $f_1$ contenues dans un cercle $C_1$ vaut au moins 4, lorsque la géographie terrestre le permet (id est : hors zones océaniques sans îles), d'où :

$$N_{11o} = b_{1o} + m_{11o} \geq 4$$

Ceci permet de bien répondre aux besoins de type A11, A21, A31 et A41.

Par analogie, on convient dans cet exemple qu'un cercle $C_2$ doit contenir au moins quatre balises d'orbitographie bifréquence, pour satisfaire les besoins A12, A22, A32 et A42, ainsi que les besoins Bk de la communauté scientifique. On obtient donc $b_{2o} \geq 4$.

Des inégalités précédentes, on en déduit une condition sur le nombre de balises monofréquences transmettant à la fréquence $f_1$ dans un cercle $C_2$ :

$$0 \leq m_{12o} \leq 4.$$

Cette double inégalité représente les différentes options de constitution fréquentielle du réseau de balises ZZZ :

- soit toutes les balises sont bifréquences ($m_{12o} = 0$) ;
- soit des balises monofréquences "comblent" le manque éventuel de balises pour les satellites placés en orbite basse (altitude de type $h_1$), supposés utiliser principalement des récepteurs ZZZ monofréquences pour des applications de navigation et détection d'attitude.

Dans l'exemple décrit précédemment, on peut estimer le nombre maximum de balises d'orbitographie transmettant à la fréquence $f_1$ :

$$N_{1O} \# N_{14Ot} \times S_T/S_4 \# 157$$

$$N_{1Ot} \# \tau_O.N_{1p} \# 110 \text{ avec } \tau_O \# 0{,}7$$

On suppose que la dégradation du facteur $\tau_o$ est limitée par :

- l'implantation d'un certain nombre de balises d'orbitographie au voisinage des pôles terrestres, afin de répondre au besoin B10 ;
- l'implantation de balises sur la plupart des îles bien réparties géographiquement, voire sur des barges flottantes ou des navires.

Le réseau de balises d'orbitographie peut être mis en place progressivement jusqu'à ce que leur nombre permette d'atteindre le niveau de redondance permettant des utilisations opérationnelles intègres. Dès lors, la pleine capacité opérationnelle du système peut être déclarée.

Les balises clientes

Les nombres $N_{ijc}$ et $N_{ijct}$ de balises clientes transmettant simultanément dans un cercle $C_i$ sont tels que :

$$N_{ijct} = N_{ij} - N_{ijot}$$

$$N_{ijc} = N_{ij} - N_{ijo}.$$

Toutefois, le nombre de balises clientes situées dans un cercle $C_j$ peut encore être bien supérieur. En effet, certaines balises peuvent ne transmettre que certains jours de la semaine. A cet effet, un mot semaine est défini (Week Word, abrégé par WW)ayant le format suivant :

$$\text{WW} = \boxed{b1} \boxed{b2} \boxed{b3} \boxed{b4} \boxed{b5} \boxed{b6} \boxed{b7} \quad (k \in \{1, \ldots, 7\})$$

où les bk sont sept booléens associés à chacun des jours de la semaine. Si l'un de ces booléens est placé à l'état "1", la balise transmet son signal pendant toute la journée associée à ce booléen. Si un autre booléen est placé à l'état "0", la balise est placée en mode veille pendant la journée correspondante.

Les balises clientes proches les unes des autres destinées à réaliser un quadrillage de terrain (pour répondre aux besoins géodésique, géodynamique et géophysique à l'échelle locale (besoins n° B9) possèdent toutes le même mot semaine (WW). Ceci permet à un ensemble de balises quadrillant un terrain à surveiller d'émettre simultanément. Ces balises, bien que très proches l'une de l'autre, ne se brouillent pas mutuellement grâce à l'accès multiple par répartition de code (AMRC). La précision de localisation relative des balises ZZZ bifréquences quadrillant un terrain est excellente, du fait de la simultanéité des transmissions. Ceci permet d'accumuler un nombre important de mesures brutes faites à bord des satellites observateurs. L'utilisation des techniques interférométriques utilisant les phases des porteuses reçues devient également possible, par analogie avec les techniques utilisées en géodésie et géophysique fine à l'aide du système GPS.

La surveillance des déformations de terrain peut être réalisée de façon très précise à l'aide d'un satellite d'observation de la terre porteur à la fois d'un récepteur ZZZ et d'un radar à synthèse d'ouverture (SAR) qui permettent d'appliquer les techniques d'interférométrie radar. Le système de l'invention fournit l'orbite du satellite porteur du radar et la localisation relative et absolue des balises quadrillant le terrain à surveiller. Il permet de suivre finement l'évolution de ces localisations au cours du temps.

Ces localisations peuvent être plus fines qu'avec les systèmes GPS, GLONASS, DORIS et PRARE actuels.

Les images interférométriques du radar SAR fournissent les courbes de déformation de terrain.

Le couplage système ZZZ - radar SAR peut donc être utilisé avantageusement pour la surveillance des risques naturels, voire leur prédiction (tremblements de terre, irruptions volcaniques...). Ceci permet de répondre au besoin B9.

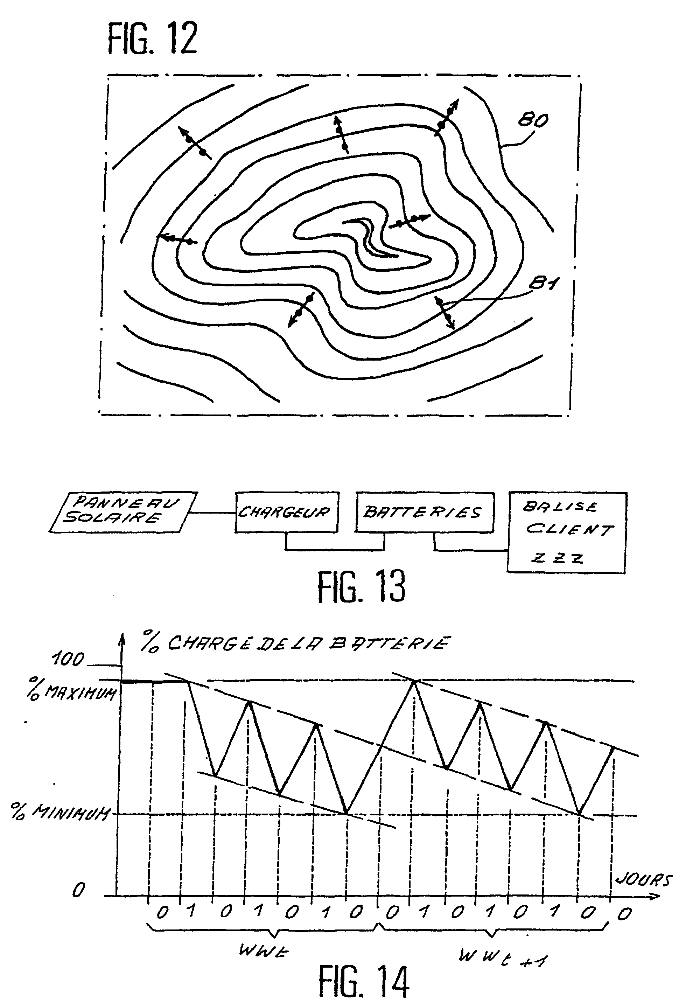

La figure 12 illustre une image interférométrique radar SAR avec les courbes de déformation du terrain 80 et les variations fines de position d'une balise cliente 81, intégrée dans un réseau de quadrillage de terrain.

Les balises clientes quadrillant une zone à risque peuvent également être colocalisées avec un capteur de type sismographe.

Certaines balises clientes implantées sur un site pour une longue durée doivent être entièrement autonomes, y compris du point de vue de leur alimentation en énergie électrique. L'énergie provient de batteries rechargées par des panneaux solaires, par exemple comme représenté sur la figure 13. Dans ce cas, il peut être nécessaire de bien répartir les valeurs des sept booléens des mots semaine de façon à établir une programmation du cycle de charge et de décharge des batteries d'alimentation de la balise concernée.

La figure 14 illustre un exemple de pourcentage de charge de la batterie en fonction du temps.

Les mots semaines des balises clientes autonomes doivent être communiqués au centre de contrôle du système de l'invention.

Le centre de contrôle génère l'ensemble des mots semaines en respectant la règle suivante :

Si $N_{ijGc}$ est le nombre global de balises clientes pouvant transmettre à la fréquence $f_i$ dans un cercle $C_j$, l'ensemble des booléens $b_{ki}$ des mots semaines des balises clientes i doivent être choisis de telle sorte que :

$$\sum_{i=1}^{N_{jGc}} b_{ki} \leq N_{ijc}$$

quel que soit k compris entre 1 et 7.

Notons que tant que $N_{jGc} \leq N_{ijc}$, la gestion des mots semaines est inutile. Toutes les balises branchées sur le secteur (i.e. : sans problème de charge et de décharge de batterie) peuvent avoir un mot semaine tel que :

$$W \ = \ \boxed{1}\ \boxed{1}\ \boxed{1}\ \boxed{1}\ \boxed{1}\ \boxed{1}\ \boxed{1}$$

Les codes PN affectés aux balises clientes doivent être choisis de façon cohérente avec ceux des mots semaines. Les codes affectés à ces balises sont nommés $C_{ci.1}$, $C_{ci.2}$, $C_{ci.3}$, ..., $C_{ci.n}$, .... . Ils sont tous orthogonaux avec tous les codes $C_{oi.k}$ associés aux balises d'orbitographie. Leur processus de sélection est tout à fait semblable au cas des balises d'orbitographie.

Le numéro d'affectation de chaque balise ZZZ, contenu dans le message de données transmis, est différent de celui de toutes les autres balises.

L'intérêt des balises monofréquences est défini en fonction des données économiques suivantes :

$\Delta_{CMB}$ = Coût de développement d'une balise mono-fréquence, si les balises bifréquences sont déjà développées.

$C_{Mn}$ = Coût récurrent d'une balise monofréquence, pour une production de n balises.

$N_M$ = Nombre de balises ne nécessitant pas strictement d'être bifréquences.

$C_{Bm}$ = Coût récurrent d'une balise bifréquence, pour une production de m balises.

$N_B$ = Nombre de balises devant obligatoirement être bifréquences.

Ces balises monofréquences peuvent être utilisées avantageusement si :

$$\Delta C_{MB} + C_{M_{NM}}.N_M + C_{B_{NB}}.N_B \leq C_{B_{NB+NM}} (N_B + N_M).$$

La connaissance des nombres de balises et des coûts associés permet donc de choisir entre les différentes options de constitution fréquentielle du Réseau de Balises au Sol (RBS).

Secteur spatial

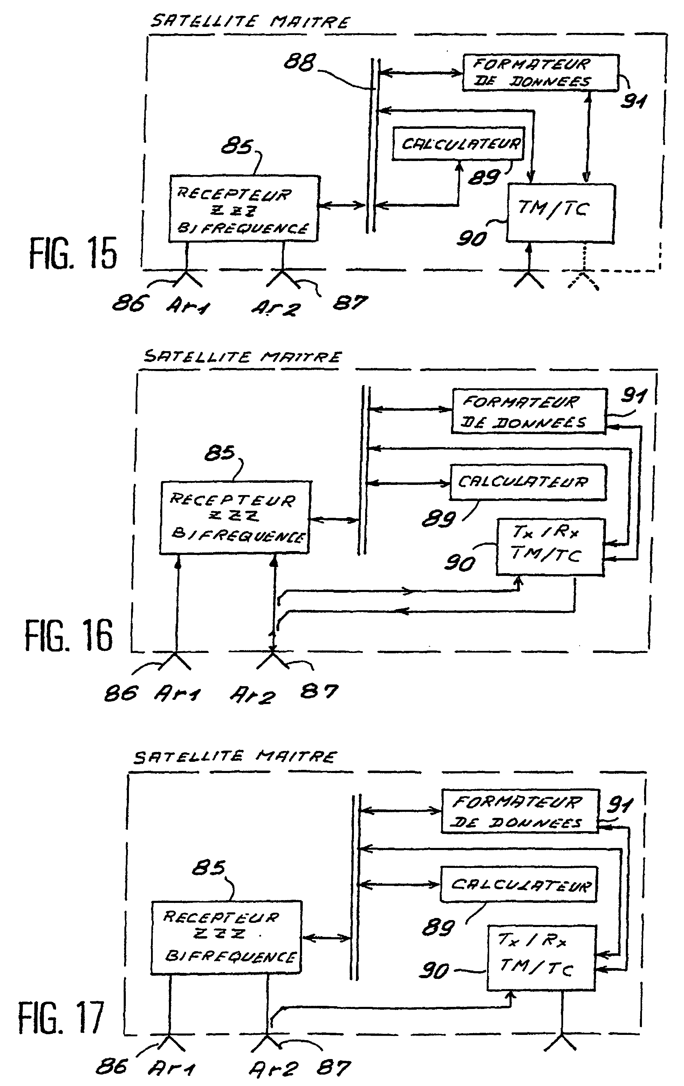

La figure 15 illustre le schéma d'un satellite maître (SM).

Les satellites maîtres sont munis d'un récepteur ZZZ bifréquence 85 et des deux antennes de réception associées 86, 87. Ce récepteur est connecté au bus de données 88 du satellite. Ce bus est relié au calculateur embarqué 89, chargé de gérer l'ensemble du système bord. Un formateur de données 91 est également relié au bus 88.

Le bus est également connecté à un formateur de données interfacé avec l'émetteur / récepteur de télémesure/télécommande (TM/TC) 90. Les mesures brutes et les données captées par le récepteur ZZZ sont ainsi adressées vers l'antenne TM/TC qui les diffuse vers le sol. Les plans de travail du récepteur maître sont reçus sous la forme de télécommandes adressées au récepteur via le bus de données du satellite.

Si le système de l'invention est utilisé de façon opérationnelle pour l'orbitographie de routine du satellite porteur, l'émetteur/récepteur destiné à la télécommande/télémesure n'a plus nécessairement besoin d'être un transpondeur cohérent, permettant de réaliser des mesures distances (et/ou Doppler) aller-retour dans les stations sol de poursuite dudit satellite.

Les émetteurs/récepteurs du satellite et desdites stations sol s'en trouvent donc simplifiés.

L'une des fréquences du système de l'invention peut être située dans la bande S dédiée à la télécommande/ télémesure (2025 - 2110 MHz). Cette fréquence f1 peut être avantageusement choisie en vue d'une compatibilité avec l'antenne de l'émetteur/récepteur TM/TC en bande S du satellite porteur : une économie du nombre d'antennes dudit satellite peut être réalisée si la bande passante de l'antenne bande S utilisée est compatible des bandes de service TM/TC utilisées et de la bande f1 du système de l'invention. En ce cas le schéma du satellite maître peut être des types illustrés sur les figures 16 et 17, les éléments identiques à ceux de la figure 14 étant représentés avec les mêmes références.

Satellite client

Le schéma est a priori le même que celui d'un satellite maître, aux exceptions suivantes près :

- le récepteur peut être monofréquence, bifréquence de référence ou de précision ;
- la transmission vers le sol des mesures brutes et des données collectées par les balises n'est pas systématique. Elle dépend de la mission du satellite client.

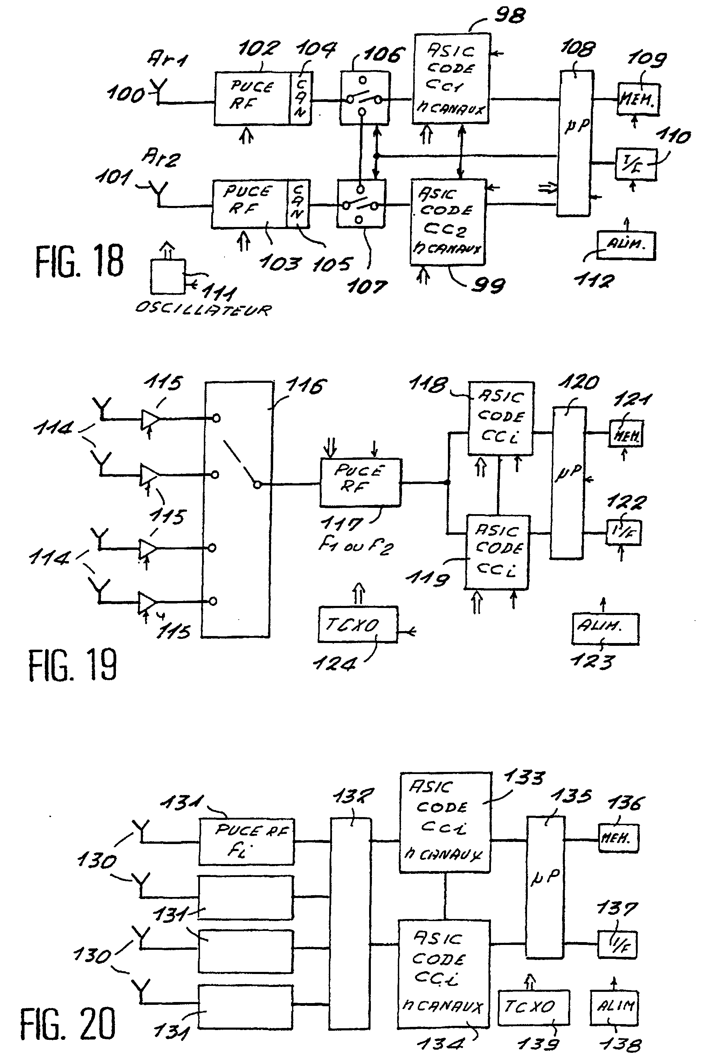

La figure 18 illustre le schéma d'un récepteur ZZZ de base. Sur cette figure sont représentés deux antennes 100, 101 reliées chacune à une puce ou hybride RF 102, 103 et un convertisseur analogique-numérique 104, 105, un commutateur numérique 106,107 et un composant ASIC 98,99 (cf. figure 18), un ensemble microprocesseur 108 étant relié à des mémoires 109 à un interface 110. L'ensemble microprocesseur 108 comprend un microprocesseur unique, ou deux microprocesseurs, ou un microprocesseur associé à un coprocesseur.

Ce récepteur comprend également un oscillateur haut de gamme 111 et une alimentation 112.

L'ASIC peut être multistandard : les canaux sont programmables (si $C_{c1} \neq C_{c2}$) et permettent de traiter les codes $C_{c1}$ et $C_{c2}$. Ce schéma exclut les cas des récepteurs de signaux provenant des satellites GPS ou GLONASS ou GNSS1.

La figure 19 illustre un récepteur ZZZ faible coût pour missions de navigation et détection d'attitude. Sur cette figure sont représentés des antennes 114, des amplificateurs 115 reliés à un commutateur rapide programmable 116, une puce RF 117 ($f_1$ ou $f_2$) reliée à deux ASIC monocode $C_{ci}$ n canaux 118, 119, un ensemble microprocesseur 120, un ensemble mémoire 121, un interface 122, une alimentation 123, un oscillateur TCXO 124. Ce schéma exclut les cas des récepteurs de signaux provenant des satellites GPS ou GLONASS.

La figure 20 illustre un récepteur ZZZ monofréquence attitude pour missions de navigation et d'attitude. Sur cette figure sont représentés des antennes 130, des puces RF $f_i$ 131, un aiguilleur d'échantillons 132, deux ASIC monocode $C_{ci}$ n canaux 133, 134, un ensemble microprocesseur 135, un ensemble mémoire 136, un interface 137, une alimentation 138 et un TCXO 139.

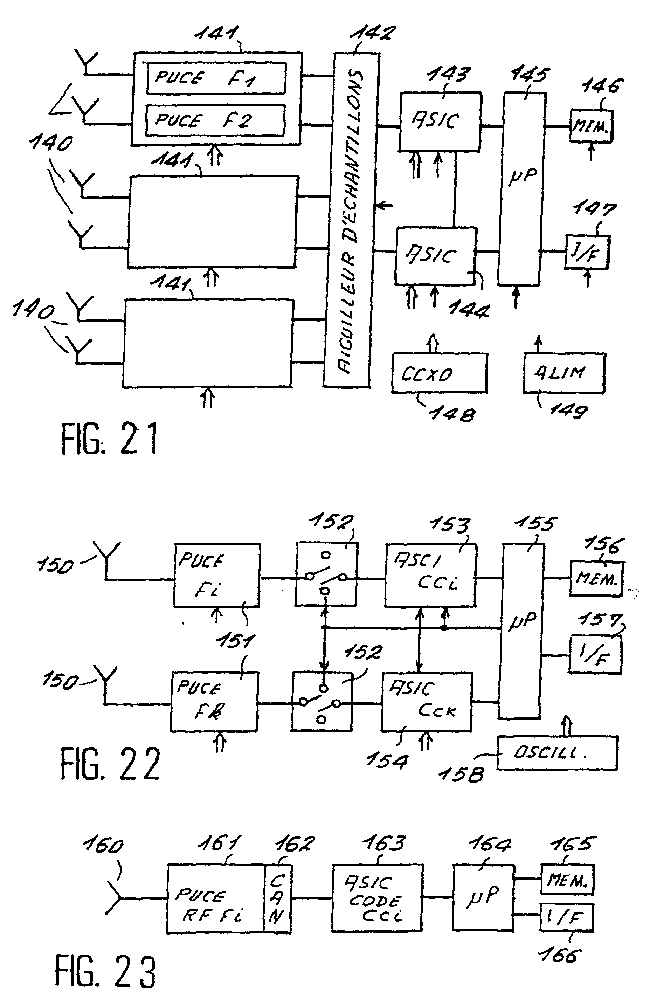

La figure 21 illustre un récepteur ZZZ bifréquence attitude pour missions de navigation, orbitographie et, détection d'attitude de précision. Sur cette figure sont représentées des antennes 140, des puces 141, un aiguilleur d'échantillons 142, des ASIC 143, 144, un ensemble microprocesseur 145, un ensemble mémoire 146, un interface 147, un oscillateur 148, une alimentation 149.

Chaque entité produisant des récepteurs ZZZ peut réaliser uniquement des récepteurs bifréquences, ou des récepteurs mono et bifréquence, en fonction d'une optimisation entre coûts de développement et parts de marché.

La figure 22 illustre un récepteur mixte GNSS-ZZZ de base. Sur cette figure sont représentées des antennes 150, des puces $f_i$ 151, des commutateurs 152, des ASIC 153 et 154, un microprocesseur 155, une mémoire 156, un interface 157, et un oscillateur 158.

fi = fréquence ZZZ $f_1$, $f_2$ ou $f_3$.

La voie de réception associée traite un signal monofréquence.

$f_k$ = fréquence GPS ou GLONASS ou GNSS2.

Les codes Cck sont les codes C/A GPS ou GLONASS ou les codes GNSS.

Ce récepteur peut répondre aux besoins suivants : $A_{11}$; $A_{12}$, $A_{13}$, $A_{14}$, $A_{31}$, $A_{32}$, $A_{33}$, $A_{34}$, $C_1$, $C_2$, $C_3$, $C_4$, $C_7$, $C_8$, $D_3$, $D_4$.

Récepteurs mixtes GNSS-ZZZ

Les récepteurs mixtes peuvent être du type :

- GLONASS-ZZZ ;
- GPS-ZZZ ;
- GNSS2-ZZZ, i.e. GNSS3.

En ce qui concerne les applications orbitales, ces récepteurs couvrent les besoins d'indépendance maximale.

En effet, les performances de navigation/orbitographie peuvent être obtenues même si seul l'un des deux systèmes est utilisé (constellation de satellites en orbite ou réseau de balises au sol).

Les récepteurs mixtes peuvent par exemple être utilisés par les satellites dont la mission doit avoir lieu pendant une période durant laquelle la constellation de satellites utilisée peut passer en mode "payant", du code C/A ou des données associées.

Par ailleurs, la visibilité simultanée de ces satellites et de ces balises permet des temps de convergence très rapides des navigateurs embarqués, pour la mise ou le maintien à poste, et une amélioration de la précision associée, lorsque les systèmes utilisés sont opérationnels.

Les récepteurs mixtes peuvent être utilisés par des satellites d'importance stratégique.

Les récepteurs mixtes peuvent avoir les configurations suivantes, en fonction de la disposition des commutateurs :

a) 2n canaux affectés au système de l'invention ;
b) n canaux affectés à la constellation de satellites utilisée et n canaux affectés au système de l'invention ;
c) 2n canaux affectés à la constellation.

La configuration b) est impérative pour les applications de type $C_1$, $C_2$, $C_3$, $C_4$, $D_3$.
Les récepteurs mixtes bifréquences (: récepteurs GNSS3 bifréquences) constituent l'optimum pour les applications scientifiques B1 à B10.

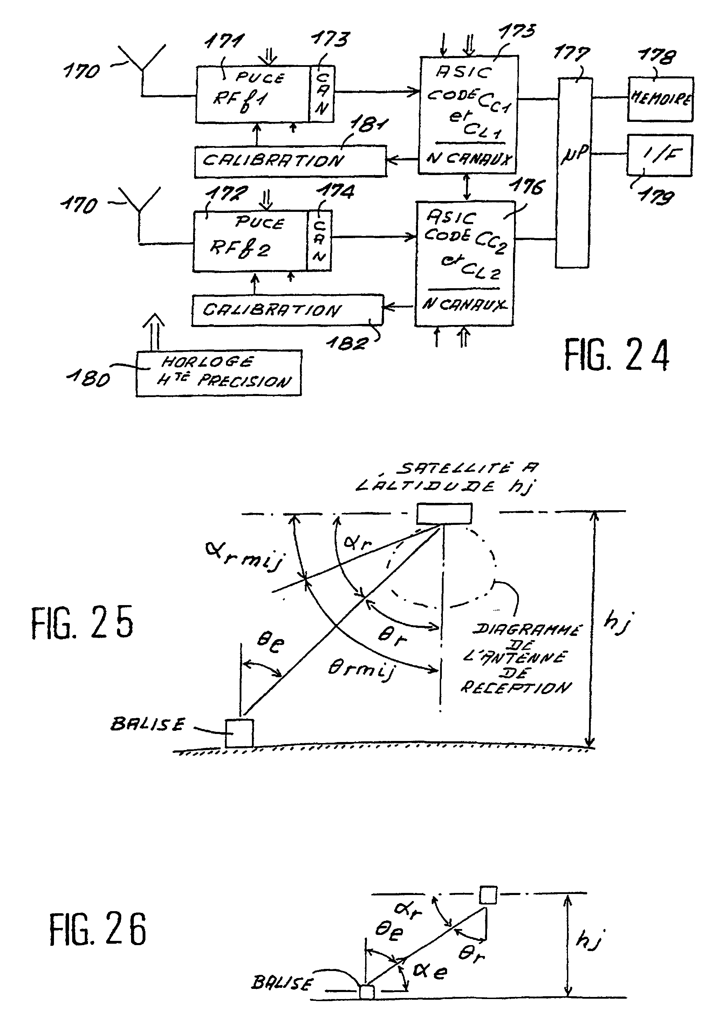

Les figures 23 et 24 illustrent respectivement un récepteur ZZZ monofréquence faible coût (navigation) et un récepteur ZZZ de précision de référence.
Sur la figure 23 est représentée une antenne 160 suivie d'une puce RF $f_i$ 161, un convertisseur analogique-numérique 162, un ASIC code $C_{ci}$ 163, un ensemble microprocesseur 164, un ensemble mémoire 165, un interface 166.
Sur la figure 24 sont représentées des antennes 170 suivies de puces RF $f_1$ et $f_2$ 171, 172, de deux convertisseurs analogiques-numériques 173, 174, de deux ASIC de précision de référence 175, 176, un ensemble microprocesseur 177, un ensemble mémoire 178, un interface 179, une horloge haute précision 180. Chaque ASIC de précision associé à la fréquence $f_i$ peut traiter le code court $C_{ci}$ et le code long $C_{Li}$. Deux modules de calibration 181, 182 sont reliés respectivement entre chaque ASIC et la puce qui lui correspond. Le récepteur ZZZ de précision de référence est adapté au traitement des signaux transmis par les balises de précision à diagramme d'antenne de type hémisphérique. Les récepteurs ZZZ dédiés au suivi d'horloge à atome froid en orbite sont munis d'ASIC de précision modifiés par rapport aux ASICS de précision de référence, dans le but de réduire les bruits de mesure instrumentaux d'origine non thermique.

Antennes de réception

Les satellites sont également caractérisés par leurs antennes de réception, décrites par les paramètres suivants :

$\alpha_r$ = Angle d'élévation de la balise, vu depuis le satellite, par rapport à l'horizontale locale.
$\alpha_{rmij}$ = Angle d'élévation minimum considéré par rapport à l'horizontale locale, pour la fréquence i ($i \in \{1;2\}$) et l'altitude satellite hj.
$\theta_r$ = Angle de visée de la balise, par rapport à la verticale locale.
$\theta_{rmij}$ = Angle de visée maximum considéré, pour la fréquence i et l'altitude satellite hj.
$G_{ri}(\theta_r)$ = Gain de l'antenne de réception pour un angle de visée $\theta_r$ et la fréquence i.

Les antennes de réception de référence sont bifréquences. Dans le cas des satellites aux orbites de type $h_1$ ou $h_2$, elles sont peu directives : leur diagramme est hémisphérique. Il a idéalement une symétrie de révolution par rapport à la verticale locale.
L'antenne est adaptée à la réception de signaux en polarisation circulaire émis par les balises ZZZ.
Le schéma de la figure 25 est adapté au cas d'un satellite en orbite basse.
Les relations liant les angles $\alpha$ et $\theta$ caractérisant l'axe de visée balise-satellite sont les suivantes :

\* Pour un satellite en orbite basse ($h_1$ ou $h_2$) : $\theta_e$ # $\theta_r$ soit $\pi/2$ # $\alpha_e + \theta_r$.

Le système est dimensionné en respectant la relation suivante :
$\theta_{rmij}$ # $\theta_{emij}$, soit $\pi/2$ # $\alpha_{emij} + \theta_{rmij}$.

\* Dans le cas général, pour un satellite d'altitude quelconque (par exemple $h_1$ ou $h_2$ ou $h_3$ ou $h_4$) on obtient :

$$\theta_e = \text{arc sin}\left[\frac{R_T + h_j}{R_T} \cdot \sin(\theta_r)\right]$$

$$\theta_{emij} = arc\ sin\left[\frac{R_T + h_j}{R_T} \cdot sin\left(\theta_{rmij}\right)\right]$$

Dans le cas des satellites géostationnaires (respectivement GNSS2) déjà mis à poste, l'antenne de réception est directive, de telle sorte que sa zone de couverture terrestre soit voisine de la zone englobée par un cercle $C_4$ (resp $C_3$).

De plus $A_{ri}$ = centre de phase de l'antenne de réception pour la fréquence $f_i$.

Performances du système ZZZ

On représente sur la figure 26 une liaison spatiale entre une balise ZZZ et un récepteur ZZZ.

On définit les notations suivantes :

C/No = Rapport puissance signal (C) à densité spectrale de bruit (No).

$$\left(\frac{C}{No}\right)_{th_{ij}} =$$

Rapport C/No ramené à l'accès antenne dû au bruit thermique, pour la fréquence $f_i$ et l'altitude hj.

$$\left(\frac{C}{No}\right)_{bse_{ij}} =$$

Rapport C/No équivalent dû aux autres balises transmettant simultanément dans un cercle cj, pour la fréquence $f_i$.

$$\left(\frac{C}{No}\right)_{bbe_{ij}} =$$

Rapport C/No équivalent dû aux brouilleurs à bande étroite présents dans un cercle cj, pour la fréquence $f_i$.

$$\left(\frac{C}{No}\right)_{bbb_{ij}} =$$

Rapport C/No équivalent dû au bruit blanc d'origine non thermique, présent dans un cercle cj, pour la fréquence $f_i$.

$$\left(\frac{C}{No}\right)_{eNb_{ij}} =$$

Rapport C/No équivalent global en environnement non brouillé.

$$\left(\frac{C}{No}\right)_{eb_{ij}} =$$

Rapport C/No équivalent global en environnement brouillé.

On obtient :

$$\left(\frac{C}{No}\right)_{eNb_{ij}}^{-1} = \left(\frac{C}{No}\right)_{th_{ij}}^{-1} + \left(\frac{C}{No}\right)_{bse_{ij}}^{-1}$$

$$\left(\frac{C}{No}\right)_{eb_{ij}}^{-1} = \left(\frac{C}{No}\right)_{eNb_{ij}}^{-1} + \left(\frac{C}{No}\right)_{bbe_{ij}}^{-1} + \left(\frac{C}{No}\right)_{bbb_{ij}}^{-1}$$

On définit d'autres notations :

c = vitesse de la lumière = $3.10^8$ m/s

$D_{ij}$ = distance entre les centres de phase $A_{ei}$ et $A_{ri}$, associée à un satellite d'altitude $h_j$.

On admet l'approximation suivante pour les calculs qui vont suivre :

$D_{1j} \# D_{2j} \# D_j$

$L_{eij}$ = Atténuation d'espace libre pour la fréquence $f_i$ ($L_e > 1$) et l'altitude hj

$L_{ai}(\theta_r)$ = Atténuation autre que celle due à l'espace libre, pour la fréquence $f_i$ ($L_a > 1$) et l'angle de visée $\theta_r$.

$L_{eij}$ =
$$\left(\frac{4\pi D_j f_i}{c}\right)^2$$

K = Constante de Boltzman = $1,379.10^{-23}$ J/K

$T_{ij}$ = Température système de bruit ramenée à l'accès de l'antenne, pour la fréquence $f_i$ et l'altitude hj.

$No_{thij}$ = Densité spectrale de bruit thermique, ramenée à l'accès de l'antenne, pour la fréquence $f_i$ et l'altitude hj.

$C_{ij}$ = Puissance de signal utile reçu, à l'accès antenne pour la fréquence $f_i$ et l'altitude hj.

$C_{ij}$ =
$$\frac{P_{ei}.G_e(\theta_e).G_r(\theta_r)}{L_{eij}(D_j) L_{ai}(\theta_r)}$$

$No_{thij}$ = $K.T_{ij}$

$$\left(\frac{C}{No}\right)_{thij} = \frac{C}{No_{thij}}$$

Dans le meilleurs cas, on obtient :

$$C_{ij\ meilleur\ cas} = \frac{P_{ei}.G_e(0).G_r(0)}{L_{eij}(h_j) L_{ai}(0)}$$

$$\left(\frac{C}{No}\right)_{thij\ meilleur\ cas} = \frac{C_{ij\ meilleur\ cas}}{No_{thij}}$$

Dans le pire cas, on obtient :

$$C_{ij\ pire\ cas} = \frac{P_{ei}.G_e(\theta_{emij}).G_r(\theta_{rmij})}{L_{eij}(D_j) L_{aj}(\theta_{rmij})}$$

et :

$$\left(\frac{C}{No}\right)_{thij\ pire\ cas} = \frac{C_{ij\ pire\ cas}}{No_{thij}}$$

Par ailleurs, on obtient :

$$\left(\frac{C}{No}\right)_{bse_{ij}\ pire\ cas} = \beta \cdot \frac{C_{ij\ pire\ cas}}{C_{ij\ meilleur\ cas}} \cdot \frac{R_{c_i}}{(N_{ij} - 1)}$$

avec :

$$\beta \# \frac{3}{2}$$

Ce calcul est pessimiste, car il suppose que la balise traitée est reçue dans le pire cas, et que les $(N_{ij} - 1)$ autres balises transmettant simultanément dans le cercle $C_j$ sont reçues dans le meilleur cas.

$$\left(\frac{C}{No}\right)_{bse_{ij}\ meilleur\ cas} = \beta \cdot \frac{C_{ij\ meilleur\ cas}}{C_{ij\ pire\ cas}} \cdot \frac{R_{c_i}}{(N_{ij} - 1)}$$

Ce calcul est optimiste car il considère que la balise traitée est reçue dans le meilleur cas et que les $(N_{ij} - 1)$ autres balises transmettant simultanément dans le cercle $C_j$ sont reçues dans le pire cas et :

$$\left(\frac{C}{No}\right)^{-1}_{eNb_{ij}\ pire\ cas} = \left(\frac{C}{No}\right)^{-1}_{thij\ pire\ cas} + \left(\frac{C}{No}\right)^{-1}_{bse_{ij}\ pire\ cas}$$

$$\left(\frac{C}{No}\right)^{-1}_{eNb_{ij}\ meilleur\ cas} = \left(\frac{C}{No}\right)^{-1}_{thij\ meilleur\ cas} + \left(\frac{C}{No}\right)^{-1}_{bse_{ij}\ meilleur\ cas}$$

Les paramètres du système de l'invention sont choisis de telle sorte que :

$$\frac{\left(\frac{C}{No}\right)_{eNb\ meilleur\ cas\ ij}}{\left(\frac{C}{No}\right)_{eNb\ pire\ cas\ ij}} \leq Mi$$

où $Mi$ est la marge d'intercorrélation liée aux codes $C_{ci}$. Ceci permet d'éviter les interférences entre codes $C_{ci}$ orthogonaux. Une marge supplémentaire peut être prise en compte lorsque les fréquences Doppler associées aux différents codes sont suffisamment éloignées l'une de l'autre.

Les paramètres de l'environnement brouillé sont les suivants :

$Nox_{ij} =$   Densité de bruit blanc (ou équivalent) d'origine industrielle vue par l'antenne de réception, pour la fréquence i et l'altitude hj.

$PbM_{ij} =$   Puissance moyenne des forts brouilleurs à bande étroite, pour la fréquence i et l'altitude de hj vue par l'antenne.

$Pbm_{ij} =$   Puissance moyenne des faibles brouilleurs à bande étroite, pour la fréquence i et l'altitude hj.

$\Delta FM_{ij} =$   Ecart de fréquence moyen entre les forts brouilleurs à bande étroite pour la fréquence i et l'altitude hj.

$\Delta Fm_{ij} =$     Ecart de fréquence moyen entre les faibles brouilleurs à bande étroite pour la fréquence i et l'altitude hj.

Les rapports

$$\left(\frac{C}{No}\right)_{bbe_{ij}} \text{ et } \left(\frac{C}{No}\right)_{bbb_{ij}}$$

sont calculés à l'aide des paramètres précités :

$$\left(\frac{C}{No}\right)_{bbb_{ij}} = \frac{C_i}{Nox_{ij}}$$

$$\left(\frac{C}{No}\right)_{bse_{ij}}^{-1} = \left\{2 \cdot \sum_{k=1}^{k=KM_{ij}} \frac{PbM_{ij} \cdot \mathrm{sinc}^2\left(\frac{k \cdot \pi \cdot \Delta FM_{ij}}{Rci}\right)}{C_{ij} \cdot Rci} + \frac{PbM_{ij}}{C_{ij} \cdot Rci}\right\} \cdot \frac{1}{\gamma}$$
$$+ \left\{2 \cdot \sum_{k=1}^{k=Km_{ij}} \frac{Pbm_{ij} \cdot \mathrm{sinc}^2\left(\frac{k \cdot \pi \cdot \Delta Fm_{ij}}{Rci}\right)}{C_{ij} \cdot Rci} + \frac{Pbm_{ij}}{C_{ij} \cdot Rci}\right\} \cdot \frac{1}{\gamma}$$

avec

$$K_{Mij} = E\left(\frac{R_{Ci}}{\Delta F_{Mij}}\right) \text{ et } K_{mij} = E\left(\frac{R_{Ci}}{\Delta F_{mij}}\right)$$

et $\gamma \# \frac{1}{2}$
où E désigne la partie entière de la fraction entre parenthèses et sinc la fonction sinus cardinal.
Les paramètres du système de l'invention sont également choisis de telle sorte que :

$$\frac{\left(\frac{C}{No}\right)_{eb \text{ meilleur cas } ij}}{\left(\frac{C}{No}\right)_{eb \text{ pire cas } ij}} \leq Mi$$

Les fréquences f1 et f2 du système de l'invention sont choisies de façon à maximiser les valeurs de

$$\left(\frac{C}{No}\right)_{eb \text{ meilleur cas}}, \left(\frac{C}{No}\right)_{eb \text{ pire cas}}, \left(\frac{C}{No}\right)_{eNb \text{ meilleur cas}}, \left(\frac{C}{No}\right)_{eNb \text{ pire cas}},$$

dans la mesure de ce que permet la législation de l'occupation des bandes de fréquence.
On introduit les notations suivantes caractérisant les ASICs des récepteurs ZZZ de référence.

$B_{bmij} =$     Bande unilatérale de bruit de mesure distance pour la fréquence $f_i$ et l'altitude hj.
$B_{npij} =$     Bande unilatérale de bruit de mesure Doppler Doppler pour la fréquence $f_i$ et l'altitude hj.

T =        Temps de comptage Doppler.

$L_i$ =        Pertes internes du récepteur entre l'entrée de l'antenne $A_{ri}$ et le point d'accès aux boucles de poursuite des signaux, pour la fréquence $f_i$.

$\sigma_{PD_{enbij}}$ =        Ecart type du bruit de mesure de pseudo-distance (m) à la fréquence $f_i$, en environnement non brouillé, pour l'altitude hj.

$\sigma_{PV_{enbij}}$ =        Ecart type du bruit de mesure de pseudo-vitesse à la fréquence $f_i$, en environnement non brouillé (m/s), pour l'altitude hj.

$\sigma_{PD_{ebij}}$

et : sont les écarts types correspondants en $\sigma_{PV_{ebij}}$ environnement brouillé.

On obtient :

$$\sigma_{PD_{enbij}} \# \frac{c}{R_{Ci}} \sqrt{ \frac{B_{nmij}}{2 \cdot \left[ \left( \frac{C}{No} \right)_{enbij} \cdot \frac{1}{L_i} \right]} \cdot \left[ 1 + \frac{2 \cdot R_{Di}}{\left[ \left( \frac{C}{No} \right)_{enbij} \cdot \frac{1}{Li} \right]} \right]}$$

$$\sigma_{PV_{enbij}} \# \frac{c}{\pi \cdot f_i \cdot T} \sqrt{ \frac{B_{npij}}{\left[ \left( \frac{C}{No} \right)_{enbij} \cdot \frac{1}{L_i} \right]} \cdot \left[ 1 + \frac{R_{Di}}{2 \left[ \left( \frac{C}{No} \right)_{enbij} \cdot \frac{1}{Li} \right]} \right]}$$

Les écarts type $\sigma_{PD_{ebij}}$ et $\sigma_{PV_{ebij}}$ se calculent à l'aide de formules identiques aux précédentes, en remplaçant

$$\left( \frac{C}{No} \right)_{enbij} \qquad \text{par} \qquad \left( \frac{C}{No} \right)_{ebij}$$

Les bruits de mesure dus aux oscillateurs sont les suivants :

$\sigma_{PD_{osc}}$ =        Ecart type à 1 sigma du bruit de mesure de pseudodistance dû aux oscillateurs.

$\sigma_{PV_{osc}}$ =        Ecart type à 1 sigma du bruit de mesure de pseudovitesse dû aux oscillateurs.

Les bruits de mesure dus aux oscillateurs se calculent à l'aide des paramètres suivants :

ΔF =        Ecart de fréquence (Hz).

F =        Fréquence centrale de l'oscillateur (Hz).

On définit la stabilité court terme de l'oscillateur, notée Si (i=b : bord ; i=S : sol).

Cette stabilité est déterminée sur la durée T du comptage Doppler :

$$S_i \approx \left[\frac{\Delta F}{F}\right]_T$$

d'où :

$$\sigma_{PD_{osc}} \# \, c.T.\sqrt{Sb^2 + Ss^2} \qquad (m)$$

$$\sigma_{PV_{osc}} \# \, c.T.\sqrt{Sb^2 + Ss^2} \qquad (m/s)$$

Le bruit court terme global de mesure de pseudodistance (respectivement pseudovitesse), noté $\sigma_{PD}$ (respectivement $\sigma_{PV}$) s'exprime comme suit :

En environnement non brouillé

$$\sigma_{PD} = \sqrt{\sigma_{PD_{enbij}}^2 + \sigma_{PD_{osc}}^2}$$

$$\sigma_{PV} = \sqrt{\sigma_{PV_{enbij}}^2 + \sigma_{PV_{osc}}^2}$$

En environnement brouillé :

$$\sigma_{PD} = \sqrt{\sigma_{PD_{ebij}}^2 + \sigma_{PD_{osc}}^2}$$

$$\sigma_{PV} = \sqrt{\sigma_{PV_{ebij}}^2 + \sigma_{PV_{osc}}^2}$$

Stratégies d'initialisation du système de l'invention

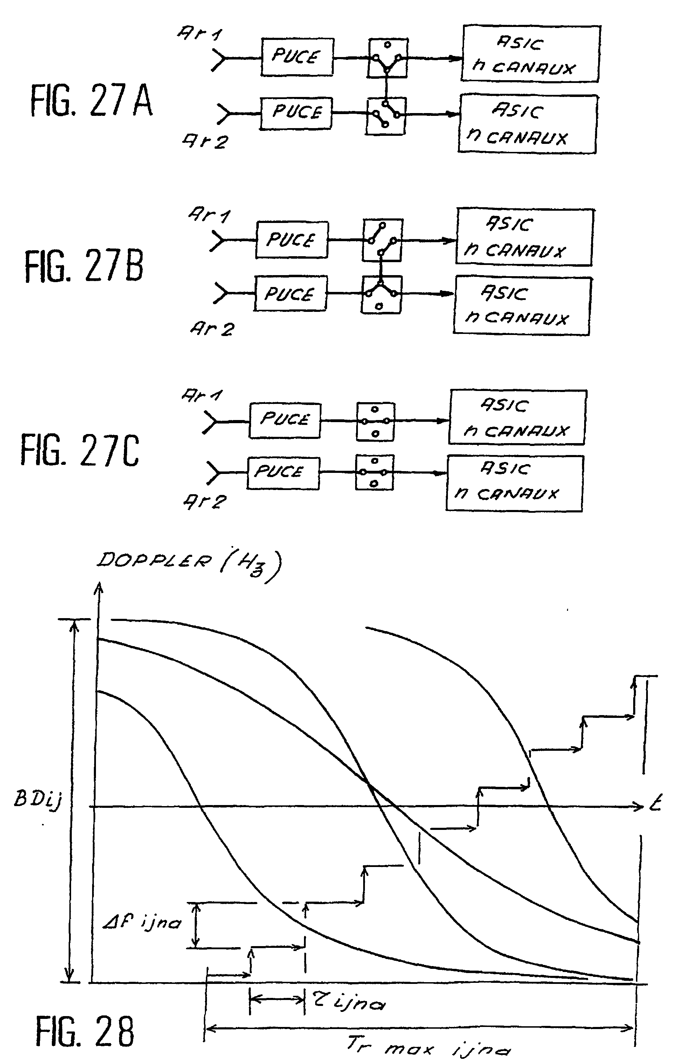

Dans le cas d'un récepteur de référence, illustré sur les figures 27A ou 27B, lors du processus d'initialisation, ce récepteur passe en mode monofréquence. Pour ce faire, il configure des commutateurs de la façon suivante.

Les ASICs, supposés multistandard (adaptés aux codes $C_{c1}$ et $C_{c2}$), sont configurés en mode monocode ($C_{c1}$ ou $C_{c2}$). Chaque canal recherche un code de balise d'orbitographie $C_{oi.k}$ observable depuis un cercle $C_j$.

Si on prend l'exemple d'une orbite d'altitude $h_1$ ou $h_2$, les codes observables peuvent être, par exemple, notés $C_{oi.1}$, $C_{oi.2}$, $\cdots$, $C_{oi.8}$, $C_{oi.9}$, $\cdots$, $C_{oi.15}$. (voir loi d'affectation des codes aux balises d'orbitographie).

Un récepteur ZZZ effectue une recherche d'énergie en parallèle pour tous les codes PN courts associés aux balises d'orbitographie. Dans le cas de l'exemple cité, ce nombre de codes est égal à 15. Si les ASICs ont n canaux, ils doivent théoriquement respecter la règle suivante :

$2 \times n \geq 15$      d'où      $n \geq 8$.

D'autre part, si $n \geq 15$, les commutateurs ne sont plus strictement nécessaires pour la parallélisation des ASICs lors de la recherche d'énergie.

Soit :

$B_{Dij}$ :      La bande Doppler située autour de la fréquence $f_i$, associée à l'altitude hj.
$V_{jmax}$ :      La vitesse radiale maximum entre le satellite et une balise pour l'altitude hj.
$\Delta F_{ijna}$ :      La largeur d'une case Doppler associée à la fréquence $f_i$ et l'altitude hj en mode d'acquisition non aidée.
$T_j$ :      La durée moyenne de visibilité d'une balise dans un cercle Cj.
$T_{rmaxija}$ :      La durée maximale de la recherche d'énergie non aidée associée à la fréquence $f_i$ et à l'altitude hj.
$N_{cDijna}$ :      Le nombre de cases Doppler pour une recherche d'énergie non aidée à la fréquence $f_i$ et à l'altitude hj.
$\tau_{ijna}$ :      La durée de balayage complet du code PN court $C_{ci}$ à l'altitude hj.

On obtient donc :

$$N_{CDij_{na}} = \frac{B_{Dij}}{\Delta F_{ij_{na}}}; \; B_{Dij} = \frac{2 \times f_i \times V_{jmax}}{c}; \; Trmaxij_{na} = N_{CDij_{na}} \times \tau_{ijna} \leq T_j$$

L'exploration des cases Doppler est réalisée en sens inverse de la variation moyenne des Dopplers observés, comme représenté sur la figure 28.

Dans une variante de l'invention, seules les cases Doppler correspondant à des écarts Doppler positifs sont explorées. Une telle stratégie peut être adoptée dans le cas de satellites stabilisés trois axes au pointage inertiel.

Par convention, un Doppler est positif lorsque le satellite et la balise considérés sont en rapprochement.

Les mesures brutes sont réalisées périodiquement.

Les mesures Doppler sont réalisées en mode chaîné, dans la mesure où les périodes de comptage Doppler sont rigoureusement jointives.

Le navigateur du récepteur ZZZ utilise les mesures Doppler et leur datation relatives pour déterminer une orbite initiale, de la même façon que les navigateurs DORIS actuels sont auto-initialisés.

Les datations absolues utilisées sont réalisées à l'aide des signaux provenant des balises maîtresses, qui diffusent des coefficients d'horloge relatifs au temps ZZZ et à un temps international tel que UTC, ainsi que, éventuellement, de certaines balises à la fois d'orbitographie et de temps, diffusant également lesdits coefficients d'horloge.

L'amélioration de la précision d'orbitographie embarquée est progressive, jusqu'à atteindre une valeur stabilisée. Cette précision est caractérisée par l'écart type à 1 σ de l'estimation de la distance (radiale) entre le satellite porteur et une balise noté $\sigma_D$.

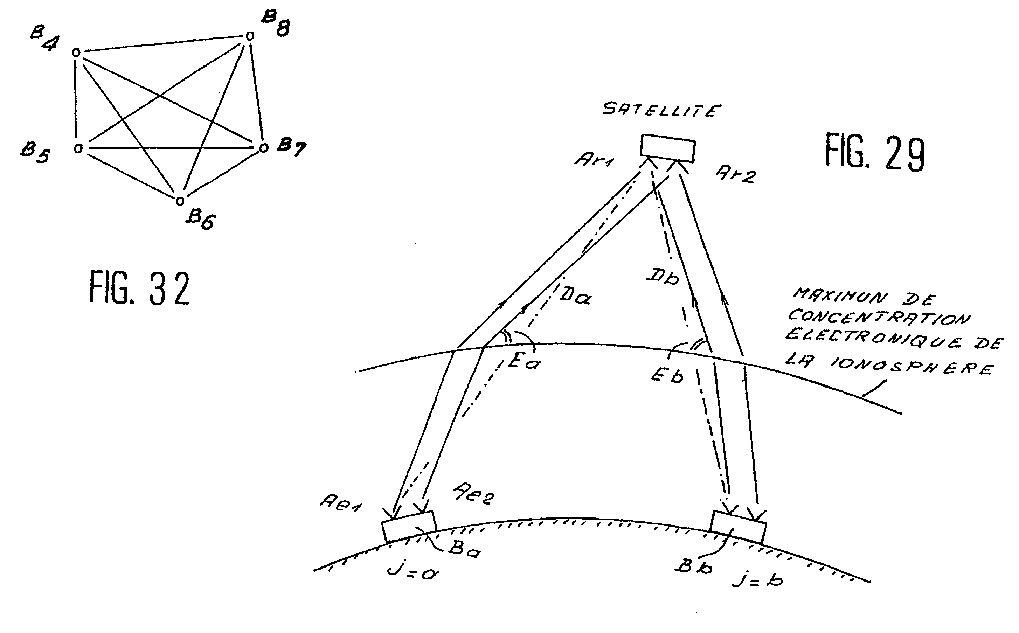

Le navigateur peut alors déterminer l'écart de temps entre l'horloge du récepteur et celle d'une balise à l'aide des mesures de pseudodistance associées à ladite balise. On considère des balises $B_j$, et un satellite muni d'un récepteur ZZZ bifréquence comme le montre la figure 29.

Les mesures de pseudodistance $PD_{ij}$ associées aux balises j=a et b et à la fréquence $f_i$ sont telles que :

$$PD_{ij} = D_j + c.\Delta T_{jsat} + c. (\tau_{ionoj\text{-}sat})_i$$

où :

- $\Delta T_{jsat}$ est l'écart de temps entre l'horloge du satellite et l'horloge de la balise j ;
- $(\tau_{ionoj\text{-}sat})_i$ est le retard ionosphérique lié au satellite et à la balise j, pour la fréquence $f_i$ ;
- $D_j$ est la distance balise j-satellite, a priori bien connue une fois que le navigateur a bien convergé.

L'écart de temps $\Delta T_{jsat}$ recherché est donc :

$$\Delta T_{jsat} = \frac{PD_{ij}\text{-}D_j}{c} - (\tau_{iono\text{-}sat})_i.$$

L'inconnue restante est le retard ionosphérique $(\tau_{ionoj\text{-}sat})_i$. On obtient :

$$(\tau_{ionoj\text{-}sat})_i \, \# \, \frac{40,3.CET}{c.\sin(Ej).f_i^2}$$

où :

- $E_j$ est l'angle d'élévation du trajet balise j-satellite au niveau du maximum de concentration électronique de la ionosphère (en radians), a priori connu ;
- CET est le contenu électronique total vertical de la ionosphère (en électron/$m^2$), a priori inconnu.

Le CET peut être mesuré directement puisque le système utilisé est bifréquence et permet des mesures de pseudodistance. On obtient :

$$CET = \frac{(PD_{1j} - PD_{2j}) \cdot \sin(E_j)}{40,3} \times \frac{f_1^2 \cdot f_2^2}{(f_2^2 - f_1^2)}$$

Le retard ionosphérique peut donc être mesuré :

$$(\tau_{ionoj\text{-}sat}) = \frac{(PD_{1j} - PD_{2j})}{c \cdot f_1^2} \times \frac{f_1^2 \cdot f_2^2}{(f_2^2 - f_1^2)}$$

L'écart type $\sigma_{(\tau ionoj\text{-}sat)_i}$ sur la mesure du retard ionosphérique est donc tel que :

$$\sigma_{(\tau ionoj\text{-}sat)_i} = \frac{f_1^2 \cdot f_2^2}{c(f_2^2 - f_1^2) \cdot f_i^2} \cdot \sqrt{\sigma_{PD1j}^2 + \sigma_{PD2j}^2}$$

où $\sigma_{PDij}$ est l'écart type de la mesure de pseudodistance, calculé pour un environnement brouillé ou non brouillé selon les cas.

L'écart type $\sigma_{\Delta Tjsat}$ sur la synchronisation bord-sol devient donc :

$$\sigma_{\Delta Tjsat} = \sqrt{\frac{\sigma_D^2 + \sigma_{PDij}^2}{c} + \sigma_{(\tau ionoj\text{-}sat)_i}^2}$$

L'incertitude sur l'écart de temps $_{\Delta Tjsat}$ calculé ici ne tient pas compte de l'erreur de calibration en TPG des équipements bord-sol notée $E_{cal}$.

L'erreur globale faite sur l'estimation instantanée de $_{\Delta Tjsat}$ est notée $E_{\Delta Tjsat}$. On peut majorer cette erreur en écrivant :

$$E_{\Delta Tjsat} \leq \sigma_{\Delta Tjsat} + E_{cal}$$

Dans la pratique, le navigateur ZZZ peut filtrer cette erreur tout au long du passage au-dessus de la balise concernée, dans le but de la réduire. Cette erreur filtrée est notée $\widehat{E_{\Delta Tjsat}}$.

Stratégies d'opérations nominales du système de l'invention

Lorsque les navigateurs ZZZ des récepteurs de référence au nombre de canaux limités sont initialisés à l'aide des mesures fournies en mode monofréquence, lesdits récepteurs passent en mode bifréquence.

La configuration associée est illustrée sur la figure 27C.

Les satellites maîtres et certains satellites clients redescendent les mesures brutes et les données recueillies à bord, à destination du centre de contrôle qui élabore les plans de travail desdits satellites. Ces plans de travail sont essentiellement constitués des numéros des balises clientes à poursuivre et des périodes d'observation associées.

Le centre de contrôle peut également adresser des plans d'initialisation à certains satellites par l'intermédiaire des balises maîtresses, en cas de besoin. Ces plans comportent par exemple les paramètres orbitaux desdits satellites, et/ou les écarts de temps entre les balises et l'horloge de ces satellites. Dès qu'une balise est accrochée nominalement, elle est poursuivie jusqu'à son coucher, par les satellites défilants.

Les navigateurs ZZZ initialisés réalisent des prépositionnements Doppler (respectivement distance) pour diminuer les temps d'accrochage des boucles de phase (respectivement de code) intégrées dans les ASICs. Ce processus de prépositionnement est caractérisé par les données suivantes :

$\Delta B_{Dijk}$ = Bande de prépositionnement Doppler, associée à l'altitude hj, la fréquence $f_i$ et à l'oscillateur bord k.

$\Delta F_{ija}$ = Largeur d'une case Doppler associée à la fréquence $f_i$ et l'altitude hj, en mode d'acquisition aidée.

$N_{CDija}$ = Nombre de cases Doppler pour une recherche d'énergie aidée à la fréquence $f_i$ à l'altitude hj et pour l'oscillateur bord k.

$N_{CDija}$ #

$$\frac{\Delta BD_{ijk}}{\Delta F_{ija}}$$

$T_{r\ maxija}$ = Durée maximale de la recherche d'énergie aidée.

$T_{ija}$ = Durée du balayage de la plage de prépositionnement distance du code PN court $C_{ci}$ à l'altitude hj.

$\Delta T_{ijk}$ = Largeur de la plage de prépositionnement distance.

$T_{r\ maxija}$ = $N_{CDija} \times \tau_{ija}$

On Choisit $T_{r\ maxija}$ tel que $T_{r\ maxija} << T_{r\ maxijna}$

$\Delta T_{acq}$ = Ecart de temps maximum entre deux acquisitions aidées de la même balise.

$$\left(\frac{\Delta F}{F}\right)_{\Delta Tacq} =$$

Dérive de fréquence maximale d'une balise sur la période $\Delta T_{acq}$.

d'où :

$$\Delta T_{ijk} \geq \Delta T_{acq} \times \left(\frac{\Delta F}{F}\right)_{\Delta Tacq} + \widetilde{E_{\Delta Tjsat}}$$

La largeur $\Delta T_{ijk}$ peut être réduite si une estimation de la dérive de l'horloge bord est connue à bord du récepteur ZZZ embarqué.

Les navigateurs embarqués permettent de prédire le Doppler dans l'axe d'une balise, ainsi que la pseudo-distance associée.

Les seuils d'acquisition et de poursuite des codes pseudoaléatoires peuvent être réduits si la prédiction Doppler est plus fine que la bande de prédiction $B_{Fi}$.

Si une réduction est permise par la technique dite du "Code Seulement", la boucle de porteuse d'un canal de réception ZZZ est ouverte et l'oscillateur commandé numériquement (OCN) est piloté par la prédiction Doppler.

La boucle de code du canal réception est du deuxième ordre et est entretenue par l'aide de Doppler. Elle rattrape l'erreur entre le Doppler réel et le Doppler prédit, et maintient l'oscillateur OCN de la boucle asservi. Ceci permet de réaliser des mesures de pseudodistance.

Par contre, la boucle de porteuse étant ouverte, le message ZZZ n'est plus démodulé. Cette méthode permet aussi de poursuivre des codes pseudoaléatoires en environnement plus fortement brouillé.

Le "Code Seulement" trouve un intérêt particulier pour les récepteurs placés en orbite géostationnaire (de type $h_4$).

En effet, les mesures de pseudodistance sont prépondérantes dans ce cas, contrairement aux mesures Doppler qui ont de faibles valeurs absolues.

Lorsque les rapports C/No sont faibles, comme cela peut être le cas pour la réception des signaux ZZZ en orbite géostationnaire, des fausses acquisitions peuvent se produire.

Deux techniques peuvent être utilisées pour détecter et rejeter ces fausses acquisitions :

- Le RAIM ("Receiver Autonomous Integrity Monitoring"). Cette technique est bien éprouvée dans le domaine des récepteurs GNSS. Elle consiste à réaliser un test de vraisemblance effectué sur la somme quadratique des résidus de mesure de pseudodistance. Pour être efficace, un nombre minimum $N_{RAIM}$ de balises doit être acquis.

- Un renforcement de la robustesse de la recherche d'énergie : pour réduire le risque de fausses acquisitions lors du balayage de la zone de recherche d'énergie, il faut noter toutes les positions de code pour lesquelles le seuil d'accrochage en mode "Code Seulement" est dépassé, et sélectionner la position de code associée au maximum maximorum d'énergie détectée, correspondant au pic principal de corrélation.

Dans le cas de l'utilisation en orbite géostationnaire, le récepteur devrait pouvoir traiter initialement :

- deux balises synchronisées (i.e. diffusant des coefficients d'horloge) reçues au-dessus du seuil d'acquisition classique (i.e. sans "Code Seulement") ; ou
- au moins $N_{RAIM}$ balises non synchronisées reçues au-dessus du seuil d'acquisition classique.

Dans ce cas le récepteur peut déterminer une orbite grossière permettant de calculer une prédiction Doppler suffisamment précise pour l'utilisation du "Code Seulement". Les balises reçues au-dessus du seuil d'acquisition classique par des satellites géostationnaires à poste ont une latitude géographique inférieure à un seuil, dépendant du bilan de liaison.

Toutefois, ces conditions initiales décrites précédemment ne sont pas strictement nécessaires pour la plupart des satellites géostationnaires à poste. En effet, le Doppler maximum peut être inférieur à la bande de prédiction $B_{Fi}$. Ceci signifie que la prédiction initiale de Doppler fournie par le navigateur peut être simplement nulle, tout en permettant à l'acquisition en mode "Code Seulement" de fonctionner, à condition que l'oscillateur embarqué soit suffisamment stable.

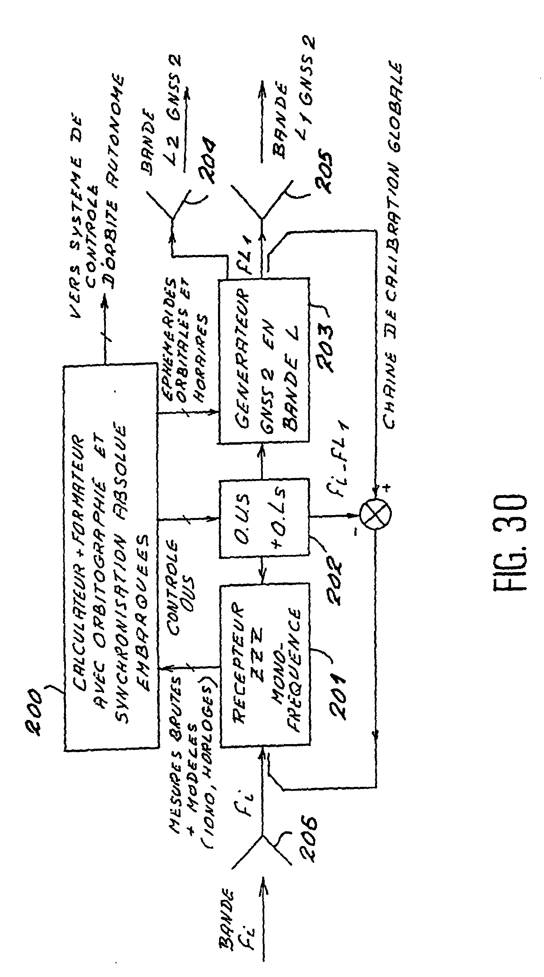

La figure 30 illustre un exemple d'utilisation de charge utile de navigation GNSS2 (en orbite de type $h_3$ ou $h_4$).

Sur cette figure sont représentés un calculateur 200 associé à des formateurs (avec orbitographie et synchronisation absolue embarquées) relié à un récepteur ZZZ monofréquence 201 connecté à une antenne 206, un ensemble OUS+OLs 202, un générateur de signaux GNSS2 en bande L 203 relié à deux antennes 204 et 205.

Le choix du type de récepteur ZZZ (monofréquence ou bifréquence) se fait selon la précision désirée pour l'orbitographie et la synchronisation absolue embarquée.

La charge utile de navigation est munie d'une chaîne de calibration globale, nécessaire pour la fonction de synchronisation absolue. Cette chaîne de calibration globale est simplifiée avantageusement si les formats de modulation des signaux ZZZ et GNSS2 sont semblables.

Utilisation du système de l'invention pour les synchronisations d'horloges

Le système de l'invention permet de connaître l'écart de temps $\Delta T_{ab}$ entre les horloges de deux balises distinctes a et b, avec grande précision.

L'écart de temps $\Delta T_{a\text{-}sat}$ entre la balise a et l'horloge du satellite est déterminé comme indiqué précédemment.

L'écart de temps $\Delta T_{b\text{-}sat}$ entre la balise b et l'horloge du satellite est déterminé de la même façon.

On obtient donc l'écart du temps $\Delta T_{ab}$ instantané :

$$\Delta T_{ab} = \Delta T_{a\text{-}sat} - \Delta T_{b\text{-}sat} .$$

Les mesures brutes de pseudodistance (associées aux balises a et b) utilisées pour ce calcul doivent être simultanées.

Cet écart de temps peut, bien sûr, être filtré à bord du récepteur ZZZ en temps réel ou, de façon plus précise, en temps différé au sein du centre de contrôle (synchronisation de routine) ou du centre de traitement (synchronisation précise).

Exemple de "synchronisation" du réseau ZZZ à l'aide des satellites à orbite de type $h_2$

Par "synchronisation" on entend la connaissance de l'écart de temps entre les balises.

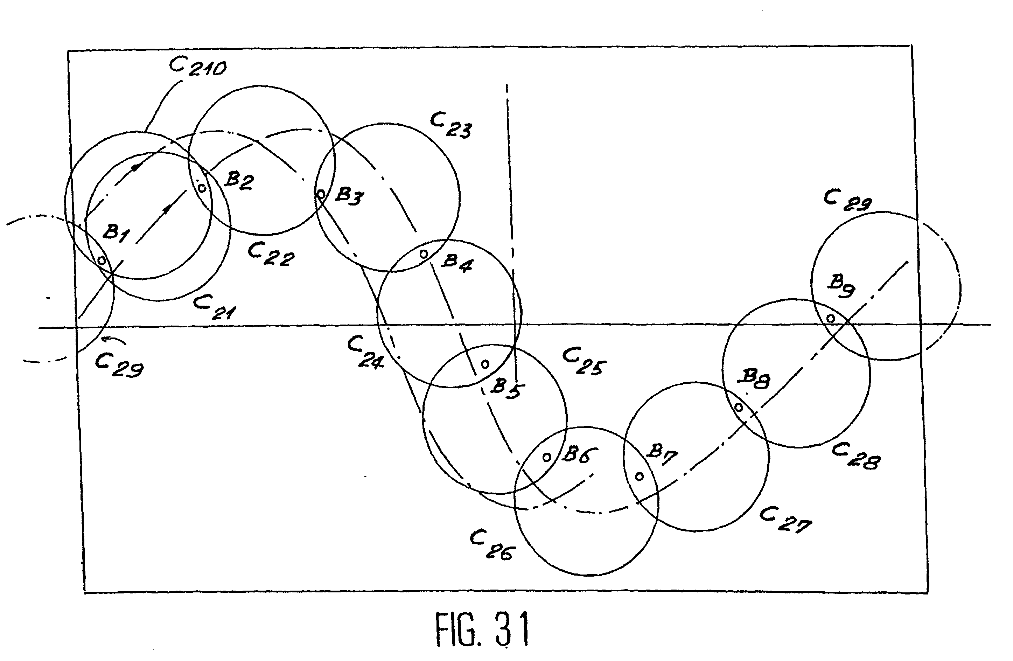

Sur la figure 31 est représentée une trace au sol d'un tel satellite et un exemple de balises survolées (les $B_i$ étant les exemples de balises visibles par le satellite considéré, les $C_{2i}$ étant les cercles de visibilité associés à la trace du satellite d'altitude $h_2$).

Pour le cercle de visibilité $C_{21}$, on détermine l'écart de temps $\Delta T_{B1B2}$ entre les balises $B_1$ et $B_2$.

Par analogie, on représente les écarts de temps déterminés pour chaque cercle de visibilité de façon séquentielle.

$$C_{22} \rightarrow \Delta T_{B2B3}$$
$$C_{23} \rightarrow \Delta T_{B3B4}$$
$$C_{24} \rightarrow \Delta T_{B4B5}$$
$$C_{25} \rightarrow \Delta T_{B5B6}$$
$$C_{26} \rightarrow \Delta T_{B6B7}$$
$$C_{27} \rightarrow \Delta T_{B7B8}$$
$$C_{28} \rightarrow \Delta T_{B8B9}$$
$$C_{29} \rightarrow \Delta T_{B9B1} \quad \longleftarrow \quad \text{On revient aux}$$
$$\text{-----------------} \qquad \text{balises d'origine}$$
$$C_{210} \rightarrow \Delta T_{B1B2} \quad \longleftarrow \quad \text{périodiquement}$$

Les estimations des écarts de temps entre balises peuvent donc être réajustées périodiquement.

Exemple de "synchronisation" du réseau ZZZ à l'aide des satellites géostationnaires, en complément des satellites à orbite de type $h_2$ (option de développement)

Dans le cas du satellite géostationnaire, la trace au sol est limitée à une zone réduite quasi-ponctuelle : le satellite est donc, par définition, toujours au-dessus de la même zone terrestre.

Dans l'exemple considéré, les balises B4, $B_5$, $B_6$, $B_7$ et $B_8$ sont donc visibles en permanence par le satellite géostationnaire, qui peut donc déterminer les écarts de temps suivants de façon simultanée et permanente :

$\Delta T_{B4B5}$
$\Delta T_{B5B6}$
$\Delta T_{B6B7}$
$\Delta T_{B7B8}$
$\Delta T_{B8B4}$
$\Delta T_{B4B6}$
$\Delta T_{B4B7}$
$\Delta T_{B5B7}$
$\Delta T_{B5B8}$
$\Delta T_{B6B8}$

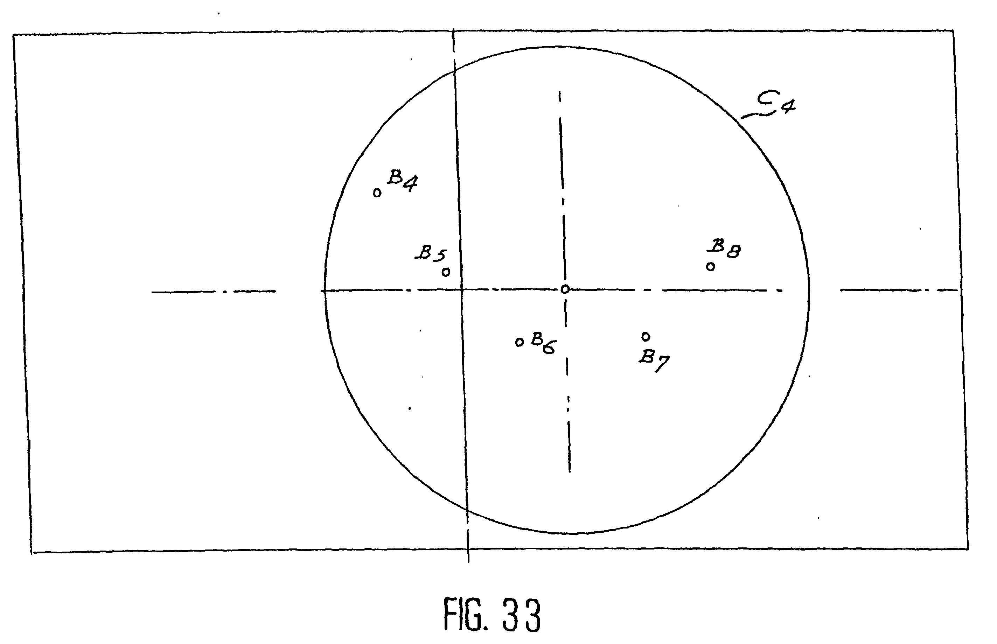

comme représenté sur les figures 32 et 33.

Plus généralement le nombre $N_{\Delta T}$ d'écarts de temps de ce type associé à n balises dans un cercle de visibilité est donc tel que :

$$N_{\Delta T} = \frac{n(n-1)}{2}$$

On conçoit donc l'intérêt des satellites géostationnaires maîtres, porteurs de récepteurs ZZZ, pour synchroniser le réseau de balises de façon plus précise qu'avec de seuls satellites en orbite basse ou héliosynchrone, tout en permettant la navigation autonome desdits satellites géostationnaires.

Plus généralement, les mesures de pseudodistance réalisées par l'ensemble des satellites maîtres et certains satellites clients peuvent être utilisées pour synchroniser le réseau, sans que l'ensemble des balises soient observées simultanément.

L'avantage décisif du système de l'invention peut être l'utilisation de la technologie GPS (et/ou GNSS) C/A pour les fréquences $f_1$ et $f_2$.

Dans ce cas, les coûts des récepteurs ZZZ produits dans un cadre industriel compétitif deviennent comparables à ceux des récepteurs GPS, pour des précisions de navigation équivalentes, voire meilleures en faveur des récepteurs ZZZ (absence de la "Sélective Availability" et de l' "Anti Spoofing" propres au système GPS, meilleure localisation des références émettrices, situées au sol).

De plus, les coûts des récepteurs ZZZ bifréquences de référence peuvent être plus compétitifs que ceux des récepteurs bifréquences GPS ou GLONASS, car ils n'ont pas besoin de technologie adaptée à la poursuite des codes longs, contrairement à ces derniers. De plus, des surcoûts sont appliqués aux récepteurs GPS bifréquences civils, du fait de l'implantation des circuits de mesure "Codeless".

En d'autres termes le système ZZZ de l'invention est plus compétitif que les systèmes GPS ou GLONASS pour la plupart des applications spatiales. Les mêmes raisonnements peuvent a fortiori être tenus vis-à-vis des systèmes DORIS actuels ou PRARE. De plus, le système de l'invention est potentiellement plus performant que tous ces systèmes, pour la plupart de leurs applications spatiales.

REFERENCES

[1] "Le système DORIS" de Michel Dorrer ("Systèmes spatiaux de localisation et de navigation", Toulouse, mars 1989, CNES)

[2] "Calcul d'orbite à bord de SPOT 4 avec DORIS" de J.P. Berthias, C. Jayles et D. Pradines (présenté lors de la journée "Détection et Localisation Spatiales" organisée par le Club 23 de la Société des Electriciens et Electroniciens à l'ONERA, le 3 février 1993)

[3] "Precise Centre National d'Etudes Spatiales orbits for TOPEX/POSEIDON : is reaching 2 cm still a challenge ?" de F. Nouël, J.P. Berthias, M. Deleuze, A. Guitart, P. Laudet, A. Piuzzi, D. Pradines, C. Valorge, C. Dejoie, M.F. Susini et D. Taburiau (Journal of Geophysical Research, vol. 99, no. C12, pages 24, 405-24, 419, décembre 1994)

[4] "Le système de localisation et de navigation GPS-NAVSTAR" de Nicolas de Cheyzelles (Systèmes spatiaux de localisation et de navigation, Toulouse, mars 1989, CNES)

[5] "Technical Description and Characteristics of Global Space Navigation System GLONASS-M" (RTCA Paper, no. 502-94/SC159-594)

[6] "The PRARE/GPS Experiment - A Contribution To Geodesy, Geodynamics and Navigation" de Wolfgand Lechner et Christoph Reigber (Satellite Navigation, conférence du Royal Institute of Navigation, 1989).

**Revendications**

**1.** Système mondial dédié à la radionavigation, à la radiolocalisation et la synchronisation de satellites, de véhicules, ou de points fixes utilisateurs, comprenant un secteur terrien, un secteur spatial, et un secteur utilisateur, dans lequel le secteur terrien comporte les éléments suivants :

- un réseau mondial de balises au sol (RBS) émettant un signal radioélectrique monodirectionnel montant en spectre étalé à destination de troisièmes satellites dits utilisateurs, chacune de ces balises transmettant un message contenant un code d'identification ;
- un centre de contrôle (CMC) qui élabore les plans d'organisation de travail de certains troisièmes satellites dits utilisateurs, ces plans d'organisation de travail comprenant des codes d'identification de balises à poursuivre et des périodes d'observation associées, ces plans d'organisation de travail étant transmis par des premières balises dites maîtresses (BM) au moment du survol de celles-ci par des satellites concernés ;
- un centre de traitement (CT), qui reçoit les télémesures classées par le centre de contrôle (CMC), qui sépare les télémesures en deux groupes : des télémesures nécessaires aux traitements du centre de traitement (CT), et des télémesures, spécifiques à certains clients, de services offerts par ledit système ;

dans lequel le secteur spatial est composé de premiers satellites dits maîtres (SM) participant étroitement au fonctionnement du système en permettant de synchroniser le réseau de balises, la télémesure de ceux-ci étant systématiquement adressée au centre de traitement, et de seconds satellites dits clients ;
dans lequel le secteur utilisateur est composé des troisièmes satellites dits utilisateurs munis de récepteurs utilisés par des clients du système et de secondes balises dites clientes,
**caractérisé en ce que** les produits issus des traitements du centre de traitement (CT) sont notamment :

- l'orbitographie précise de certains troisièmes satellites dits utilisateurs ;
- l'attitude précise de certains troisième satellites dits utilisateurs ;
- les paramètres représentatifs de l'ionosphère ;
- les coefficients d'horloge de certaines balises,'référencés par rapport au temps du système qui est produit par le centre de traitement (CT) ;

ces produits étant d'une part distribués aux clients des services dudit système et retournés au centre de contrôle (CMC), qui les utilise pour élaborer ses plans d'organisation de travail et de programmation, et fournir des orbites aux stations de télémesure/télécommande utilisant les services dudit système,

et **en ce que** :

- le signal radioélectrique montant à destination des satellites émis par les balises au sol est modulé par un code court d'étalement de spectre, les antennes des balises étant pointées vers le zénith, avec un diagramme de rayonnement hémisphérique,
- les premiers satellites dits maîtres sont munis d'un récepteur spécifique connecté à un oscillateur ultra stable (OUS), les mesures brutes effectuées par ce récepteur et les données provenant des balises étant formatées sous la forme de télémesures, reçues au sol, à destination finale du centre de traitement (CT), ces satellites ayant des orbites de type quasi-héliosynchrone, complétées par orbites de type basse et/ou géostationnaires,
- les seconds satellites dits clients n'adressent pas forcément leurs télémesures au centre de traitement, et ne sont pas nécessairement capables de traiter le message transmis par les premières balises dites maîtresses,
- deux balises de même type sont espacées d'une distance supérieure ou égale au diamètre des cercles de visibilité (Cj) au sein desquels lesdites balises peuvent être utilisées.

2. Système selon la revendication 1, **caractérisé en ce que** les balises au sol sont de différents types, et notamment :

- des troisièmes balises dites d'orbitographie (BO), dont la position est parfaitement connue, qui transmettent un signal en permanence, et qui transmettent leur position périodiquement ;
- des secondes balises dites clientes (BC), comportant notamment des balises de localisation (BL), qui ont leur position qui est a priori inconnue lors de leur mise en service ;
- des premières balises dites maîtresses (BM) qui transmettent des informations utiles et des plans d'organisation de travail à certains troisièmes satellites dits utilisateurs et/ou partie prenante du système.

3. Système selon la revendication 1, **caractérisé en ce que** les seconds satellites dits clients peuvent avoir tout type d'orbite et font à la fois partie du segment spatial et du segment utilisateur du système.

4. Système selon la revendication 1, **caractérisé en ce que** les secondes balises dites clientes comprennent des balises de localisation, ou des balises de temps.

5. Système selon la revendication 1, **caractérisé en de que** les balises sont monofréquences ou bifréquences.

6. Système selon la revendication 1, **caractérisé en ce qu'**il comporte des récepteurs monofréquences ou bifréquences.

7. Système selon la revendication 1, **caractérisé en ce qu'**il comporte des quatrièmes balises dites de précision.

8. Système selon la revendication 7, **caractérisé en ce que** les quatrièmes balises dites de précision sont bifréquences et qu'au moins l'une des porteuses transmises est modulée par un code long d'étalement de spectre (code de précision) en plus d'un code court (code de référence).

9. Système selon la revendication 1, **caractérisé en ce qu'**il comporte des récepteurs en orbite, ou au voisinage de la surface terrestre (fixes ou mobiles).

10. Système selon la revendication 1 comportant les récepteurs suivants :

- récepteurs de base ;
- récepteurs faible coût de navigation ;
- récepteurs faible coût de navigation et détection d'attitude ;
- récepteurs de navigation et d'attitude ;

- récepteurs pour navigation, orbitographie et détection d'attitude de précision ;
- récepteurs mixtes, capables de traiter les signaux transmis par les balises du système, ainsi que par les satellites des constellations GNSS.

11. Système selon la revendication 1, **caractérisé en ce qu'**il comporte des récepteurs traitant seulement les codes de référence et des récepteurs traitant à la fois les codes de référence et les codes de précision (récepteurs de précision).

12. Système selon la revendication 1, **caractérisé en ce que** qu'il comporte un sous-système de suivi précis de la dérive d'une horloge à atomes froids en orbite.

13. Système selon la revendication 1, **caractérisé en ce que** le séquencement éventuel des émissions des secondes balises dites clientes est géré selon un cycle journalier, décrit par des "mots semaines".

14. Système selon la revendication 1, **caractérisé en ce que** les balises au sol sont toutes semblables, sur le plan architecture électrique et antenne, à l'exception :

- des balises adaptées au suivi précis de la dérive d'une horloge à atomes froids en orbite, qui, au lieu d'avoir un diagramme d'antenne de type hémisphérique, ont un diagramme directif ;
- de certaines balises de cellules autonomes locales, qui peuvent avoir un diagramme d'antenne spécifique.

15. Système selon la revendication 1, **caractérisé en ce que**, couplé à la technique de l'imagerie interférométrique à l'aide de satellites radar S.A.R., il comprend des moyens de suivi fin des déformations d'un terrain quadrillé par des balises reçues par un récepteur dudit système, monté sur lesdits satellites radar.

16. Système selon la revendication 1, **caractérisé en ce qu'**il comprend des moyens de connaissance fine des écarts entre les horloges des balises, des balises de temps en particulier, à l'aide de satellites défilants et géostationnaires porteurs d'un récepteur dudit système.

17. Système selon la revendication 1, **caractérisé en ce que** les satellites de navigation de type GNSS2 utilisent un récepteur dudit système pour réaliser leur propre navigation, et en dérivent des éphémérides orbitales et horaires devant être diffusées à destination des utilisateurs desdits satellites GNSS2.

18. Système selon la revendication 1, **caractérisé en ce qu'**il comporte des cellules autonomes locales de balises et de récepteurs, ces cellules pouvant être reliées radioélectriquement aux premiers ou seconds dits satellites maîtres ou clients.

## Claims

1. Global system dedicated to radionavigation, radiopositioning and synchronization of satellites, vehicles or fixed user points, comprising a land segment, a space segment and a user segment, wherein the land segment has the following elements:

- a global network of beacons on the ground (RBS) emitting an upward monodirectional radio signal in spread spectrum with as its destination third or user satellites, each of the beacons transmitting a message containing an identification code,
- a control centre (CMC), which produces work organization plans of certain third or user satellites, said work organization plans incorporating identification codes of the beacons to be tracked and the associated observation periods, said work organization plans being transmitted by first or master beacons (BM) at the time of the overflying thereof by the satellites in question,
- a processing centre (CT) receiving the remote measurements classified by the control centre (CMC), which subdivides the remote measurements into two groups, namely the remote measurements necessary for processing operations of the processing centre (CT) and remote measurements specific to certain clients or services offered by said system,

wherein the space segment is constituted by first or master segments (SM) closely participating in the operation of the system and making it possible to synchronous the network of beacons, the remote measurement thereof being systematically addressed to the processing centre, and second or client satellites,

wherein the user segment is constituted by third or user satellites equipped with receivers used by clients of the system and second or client beacons, **characterized in that** the products resulting from the processing operations of the processing centre (CT) are in particular:

- the precise orbitography of certain third or user satellites,
- the precise attitude of certain third or user satellites,
- parameters representative of the ionosphere,
- clock coefficients of certain beacons, referenced with respect to the timing of the system produced by the processing centre (CT),
- said products being on the one hand distributed to clients for the services of said system and being returned to the control centre (CMC), which uses them for producing its work organization plans and for programming and supplying orbits to the remote measurement/remote control stations using the services of said system and **in that**
- an upward radio signal intended for satellites emitted by the beacons to the ground is modulated by a short spread spectrum code, the antennas of the beacons being pointed towards the zenith, with a hemispheric radiation diagram,
- the first or master satellites are equipped with a specific receiver connected to an ultrastable oscillator (OUS), the unprocessed measurements performed by said receiver and the data from the beacons being formatted in the form of remote measurements received on the ground and having as the final destination the processing centre (CT), said satellites having quasi-heliosynchronous orbits, supplemented by low and/or geostationary orbits,
- the second or client satellites not necessarily addressing their remote measurements to the processing centre and are not necessarily able to process the message transmitted by the first or master beacons,
- two beacons of the same type are spaced by a distance equal to or greater than the diameter of the visibility circles (Cj) within which said beacons can be used.

2. System according to claim 1, **characterized in that** the ground beacons are of different types and in particular:

- third or orbitography beacons (BO), whose position is perfectly known and which permanently transmit a signal and which transmit their position periodically,
- second or client beacons (BC) having in particular positioning beacons (BL), which have an a priori unknown position during their putting into service,
- first or master beacons (BM) transmitting useful information and work organization plans to certain third or user satellites and/or an accepting part of the system.

3. System according to claim 1, **characterized in that** the second or client satellites can have any type of orbit and both form part of the space segment and the user segment of the system.

4. System according to claim 1, **characterized in that** the second or client satellites comprise positioning beacons or time beacons.

5. System according to claim 1, **characterized in that** the beacons are of the single or two-frequency types.

6. System according to claim 1, **characterized in that** it has single or two-frequency receivers.

7. System according to claim 1, **characterized in that** it has precision beacons.

8. System according to claim 7, **characterized in that** the fourth or precision beacons are of the two-frequency type and at least one of the carriers transmitted is modulated by a long spread spectrum code (precision code) in addition to a short code (reference code).

9. System according to claim 1, **characterized in that** it has receivers in orbit or in the vicinity of the earth's surface (fixed or mobile).

10. System according to claim 1, comprising the following receivers:

- basic receivers;

- low cost navigation receivers;
- low cost navigation and attitude detection receivers;
- navigation and attitude receivers;
- navigation, orbitography and precision attitude detection receivers;
- mixed receivers capable of processing signals transmitted by beacons in the system, and by satellites in GNSS constellations.

**11.** System according to claim 1, **characterized in that** it comprises receivers processing reference codes only and receivers simultaneously processing reference codes and precision codes (precision receivers).

**12.** System according to claim 1, **characterized in that** it comprises a subsystem for precise monitoring of the drift of an orbiting cold atomic clock.

**13.** System according to claim 1, **characterized in that** the sequencing of transmissions from client beacons (if any) is managed according to a daily cycle described by "week words".

**14.** System according to claim 1, **characterized in that** beacons on the ground are all similar for the electrical and antenna architecture, except for:

- beacons adapted for precise monitoring of the drift of an orbiting cold atomic clock, which have a directional diagram instead of a hemispherical type antenna diagram;
- some beacons in local autonomous cells which have a specific antenna diagram.

**15.** System according to claim 1, **characterized in that** when used with interferometric imagery technique using S.A. R. radar satellites, it can be used to monitor precise deformations of a terrain covered by a mesh of beacons received by a receiver forming part of the said system installed on the said radar satellites.

**16.** System according to claim 1, **characterized in that** it can determine precise variations between beacon clocks, and time beacons in particular, using orbiting and geostationary satellites carrying a receiver of the said system.

**17.** System according to claim 1, **characterized in that** GNSS2 type navigation satellites use a receiver of the said system to do their own navigation, and derive orbit and time ephemeris tables to be broadcast to users of the said GNSS2 satellites.

**18.** System according to claim 1, **characterized in that** it includes local autonomous beacon and receiver cells, these cells being radioelectrically connected to master or client satellites.

**Patentansprüche**

**1.** Weltweites System für die Funknavigation, die Funkortung und die Synchronisation von Satelliten, Fahrzeugen oder Benutzer-Fixpunkten, mit einem Erdsektor, einem Weltraumsektor und einem Benutzersektor,
wobei der Erdsektor die folgenden Elemente aufweist:

- ein weltweites Netz aus Baken am Boden (RBS), die ein aufsteigendes monodirektionales funkelektrisches Signal mit ausgebreitetem Spektrum zu dritten sogenannten Benutzer-Satelliten aussenden, wobei jede der Baken eine Nachricht überträgt, die einen Identifikationscode enthält;
- ein Kontrollzentrum (CMC), das die Arbeitsorganisationspläne gewisser dritter sogenannter Benutzersatelliten ausarbeitet, wobei diese Arbeitsorganisationspläne Identifikationscodes von zu verfolgenden Baken und zugeordnete Beobachtungsperioden aufweisen, wobei diese Arbeitsorganisationspläne durch erste sogenannte Hauptbaken (BM) zu dem Zeitpunkt übertragen werden, an dem sie von den betreffenden Satelliten überflogen werden;
- ein Verarbeitungszentrum (CT), das die durch das Kontrollzentrum (CMC) klassierten Fernmessungen empfängt, das die Fernmessungen in zwei Gruppen trennt: Fernmessungen, die für die Verarbeitungen des Verarbeitungszentrums (CT) notwendig sind, und für gewisse Kunden spezifische Fernmessungen von Diensten, die durch das System angeboten werden;

wobei der Weltraumsektor aus ersten sogenannten Hauptsatelliten (SM), die in enger Weise an der Funktion des Systems teilnehmen, indem sie das Synchronisieren des Netzes aus Baken ermöglichen, wobei deren Fernmessung systematisch an das Verarbeitungszentrum adressiert wird, und aus zweiten sogenannten Kundensatelliten besteht;

wobei der Benutzersektor aus dritten sogenannten Benutzersatelliten, die mit Empfängern ausgestattet sind, die durch die Kunden des Systems verwendet werden, und aus zweiten sogenannten Kundenbaken besteht, **dadurch gekennzeichnet, dass** die aus den Verarbeitungen des Verarbeitungszentrums (CT) hervorgehenden Produkte insbesondere die folgenden sind:

- die genaue Orbitographie gewisser dritter sogenannter Benutzersatelliten;
- die genaue Einstellung gewisser dritter sogenannter Benutzersatelliten;
- die für die Ionosphäre repräsentativen Parameter;
- die Uhrenkoeffizienten gewisser Baken bezogen auf das Zeitmaß des Systems, das durch das Verarbeitungszentrum (CT) erzeugt wird;

wobei diese Produkte einerseits an die Kunden der Dienste des Systems verteilt und an das Kontrollzentrum (CMC) zurückgeführt werden, welches sie verwendet, um seine Arbeitsorganisations- und Programmierpläne auszuarbeiten, und um den Fernmessung/Fernsteuerung-Stationen, welche die Dienste des Systems verwenden, Orbite bereitzustellen, und dass:

- das zu den Satelliten aufsteigende funkelektrische Signal, das durch die Baken am Boden ausgesendet wird, durch einen kurzen Spektrumsausbreitungscode moduliert wird, wobei die Antennen der Baken zum Zenith hin gerichtet sind und ein hemisphärisches Strahlungsdiagramm haben,
- die ersten sogenannten Hauptsatelliten mit einem spezifischen Empfänger ausgestattet sind, der mit einem ultrastabilen Oszillator (OUS) verbunden ist, wobei die durch diesen Empfänger durchgeführten Rohmessungen und die von den Baken stammenden Daten in Form von Fernmessungen formatiert werden, die am Boden empfangen werden und letztendlich für das Verarbeitungszentrum (CT) bestimmt sind, wobei diese Satelliten quasi-heliosynchrone Orbite haben, die durch niedrige und/oder geostationäre Orbite ergänzt werden,
- die zweiten sogenannten Kundensatelliten nicht zwangsläufig ihre Fernmessungen an das Verarbeitungszentrum richten und nicht notwendigerweise in der Lage sind, die durch die ersten sogenannten Hauptbaken übertragene Nachricht zu verarbeiten,
- zwei gleichartige Baken über eine Entfernung beabstandet sind, die grösser oder gleich dem Durchmesser der Sichtbarkeitskreise (Cj) ist, innerhalb derer die Baken verwendet werden können.

2. System nach Anspruch 1, **dadurch gekennzeichnet, dass** die Baken am Boden unterschiedlicher Art sind, und zwar insbesondere:

- dritte sogenannte Orbitographie-Baken (BO), deren Position vollkommen bekannt ist, die ständig ein Signal übertragen und die ihre Position periodisch übertragen;
- zweite sogenannte Kundenbaken (BC), die insbesondere Ortungsbaken (BL) aufweisen, die eine Position haben, die während ihrer Inbetriebnahme vorab unbekannt ist;
- erste sogenannte Hauptbaken (BM), die nützliche Informationen und Arbeitsorganisationspläne an gewisse dritte sogenannte Benutzersatelliten und/oder einen Abnehmerteil des Systems übertragen.

3. System nach Anspruch 1, **dadurch gekennzeichnet, dass** die zweiten sogenannten Kundensatelliten jede Art von Orbit haben können und gleichzeitig Teil des Weltraumsegments und des Benutzersegments des Systems sind.

4. System nach Anspruch 1, **dadurch gekennzeichnet, dass** die zweiten sogenannten Kundenbaken Ortungsbaken oder Zeitbaken aufweisen.

5. System nach Anspruch 1, **dadurch gekennzeichnet, dass** die Baken monofrequent oder bifrequent sind.

6. System nach Anspruch 1, **dadurch gekennzeichnet, dass** es monfrequente oder bifrequente Empfänger aufweist.

7. System nach Anspruch 1, **dadurch gekennzeichnet, dass** es vierte sogenannte Präzisionsbaken aufweist.

8. System nach Anspruch 7, **dadurch gekennzeichnet, dass** die vierten sogenannten Präzisionsbaken bifrequent sind und dass mindestens eine der übertragenen Trägerfrequenzen durch einen langen Spektrum-Ausbreitungscode (Präzisionscode) zusätzlich zu einem kurzen Code (Referenzcode) moduliert wird.

**9.** System nach Anspruch 1, **dadurch gekennzeichnet, dass** es (feststehende oder bewegliche) Empfänger im Orbit oder in der Umgebung der Erdoberfläche aufweist.

**10.** System nach Anspruch 1, welches die folgenden Empfänger aufweist:

- Basisempfänger;
- kostengünstige Navigationsempfänger;
- kostengünstige Navigations- und Einstellungserfassungs-Empfänger;
- Navigations- und Einstellungsempfänger;
- Empfänger zur Navigation, Orbitographie und Präzisions-Einstellungserfassung;
- gemischte Empfänger, welche die durch die Baken des Systems sowie durch die Satelliten der GNSS-Konstellationen übertragenen Signale verarbeiten können.

**11.** System nach Anspruch 1, **dadurch gekennzeichnet, dass** es Empfänger, die nur die Referenzcodes verarbeiten, und Empfänger, die gleichzeitig die Referenzcodes und die Präzisionscodes verarbeiten (Präzisionsempfänger), aufweist.

**12.** System nach Anspruch 1, **dadurch gekennzeichnet, dass** es ein Untersystem zur präzisen Nachführung des Driftens einer Kaltatomuhr im Orbit aufweist.

**13.** System nach Anspruch 1, **dadurch gekennzeichnet, dass** die eventuelle Sequenzierung der Aussendungen der zweiten sogenannten Kundenbaken gemäss einem Tageszyklus geleitet wird, der durch "Wochenwörter" beschrieben wird.

**14.** System nach Anspruch 1, **dadurch gekennzeichnet, dass** die Baken am Boden hinsichtlich ihrer elektrischen Architektur und Antenne alle ähnlich sind, mit Ausnahme von:

- Baken, die für die präzise Nachführung des Driftens einer Kaltatomuhr im Orbit ausgelegt sind, die anstatt eines hemisphärischen Antennendiagramms ein gerichtetes Diagramm haben;
- gewissen Baken für lokale autonome Zellen, die ein spezifisches Antennendiagramm haben können.

**15.** System nach Anspruch 1, **dadurch gekennzeichnet, dass** es gekoppelt an die interferometrische Abbildungstechnik mit Hilfe von SAR-Radarsatelliten Mittel zur Feinnachführung der Verformungen eines durch Baken gerasterten Geländes aufweist,
wobei die Verformungen durch einen Empfänger des Systems empfangen werden, der auf den Radarsatelliten montiert ist.

**16.** System nach Anspruch 1, **dadurch gekennzeichnet, dass** es Mittel zur Feinerkennung der Abweichungen zwischen den Uhren der Baken, insbesondere den Zeitbaken, mit Hilfe von vorbeiziehenden und geostationären Satelliten aufweist, die einen Empfänger des Systems tragen.

**17.** System nach Anspruch 1, **dadurch gekennzeichnet, dass** die Navigationssatelliten des Typs GNSS2 einen Empfänger des Systems verwenden, um ihre eigene Navigation zu verwirklichen, und hieraus die orbitalen und stündlichen Ephemeriden herleiten, die zu den Benutzern der GNSS2-Satelliten ausgestrahlt werden sollen.

**18.** System nach Anspruch 1, **dadurch gekennzeichnet, dass** es lokale autonome Baken- und Empfängerzellen aufweist, die funkelektrisch mit den ersten oder den zweiten sogenannten Hauptsatelliten oder Kundensatelliten verbunden werden können.

FIG. 1

FIG. 2

FIG. 3

FIG. 5

FIG. 7

FIG. 4

SATELLITE

FIG. 6

STATION DE PRECISION A

STATION DE PRECISION B

STATION DE PRECISION C

STATION DE PRECISION D

FIG. 8

BALISE

$C_1$

$C_2$

$C_3$

$C_4$

TERRE

CERCLE DE VISIBILITE $C_j$

FIG. 9

FIG. 10

FIG. 11

FIG. 12

FIG. 13

FIG. 14

SATELLITE MAITRE

88

FORMATEUR
DE DONNEES
91

85

CALCULATEUR
89

RECEPTEUR
Z ZZ
BIFREQUENCE

TM/TC
90

FIG. 15

86 Ar1     Ar2     87

SATELLITE MAITRE

FORMATEUR
DE DONNEES
91

85

CALCULATEUR
89

RECEPTEUR
Z ZZ
BIFREQUENCE

Tx / Rx
TM/TC
90

FIG. 16

86 Ar1     Ar2     87

SATELLITE MAITRE

FORMATEUR
DE DONNEES
91

85

CALCULATEUR
89

RECEPTEUR
Z ZZ
BIFREQUENCE

Tx / Rx
TM/Tc
90

FIG. 17

86 Ar1     Ar2  87

FIG. 18

FIG. 19

FIG. 20

FIG. 21

FIG. 22

FIG. 23

FIG. 24

FIG. 25

FIG. 26

FIG. 27 A

FIG. 27 B

FIG. 27 C

FIG. 28

FIG. 32

FIG. 29

SATELLITE

MAXIMUN DE
CONCENTRATION
ÉLECTRONIQUE DE
LA IONOSPHERE

EP 0 804 743 B1

**200** CALCULATEUR + FORMATEUR AVEC ORBITOGRAPHIE ET SYNCHRONISATION ABSOLUE EMBARQUEES

VERS SYSTEME DE CONTROLE D'ORBITE AUTONOME

MESURES BRUTES + MODELES (IONO, HORLOGES)

CONTROLE OUS

EPHEMERIDES ORBITALES ET HORAIRES

BANDE L2 GNSS 2 **204**

BANDE Fi

Fi

RECEPTEUR ZZZ MONO-FREQUENCE **201**

O. US + O.Ls **202**

GENERATEUR GNSS 2 EN BANDE L **203**

FL1

BANDE L1 GNSS 2 **205**

**206**

Fi - FL1

CHAINE DE CALIBRATION GLOBALE

FIG. 30

FIG. 31

FIG. 33